(19) 

(11) **EP 3 936 596 B1**

(12) **EUROPEAN PATENT SPECIFICATION**

(45) Date of publication and mention of the grant of the patent:
**09.09.2026 Bulletin 2026/37**

(21) Application number: **20767102.5**

(22) Date of filing: **30.01.2020**

(51) International Patent Classification (IPC):
***C11D 17/08*** (2006.01) ***C11D 7/50*** (2006.01)
***B41J 2/01*** (2006.01) ***B41J 2/165*** (2006.01)
***C09D 11/322*** (2014.01) ***B41M 5/00*** (2006.01)
***C09D 11/38*** (2014.01) ***C09D 11/107*** (2014.01)
***C09D 11/40*** (2014.01) ***C09D 11/54*** (2014.01)

(52) Cooperative Patent Classification (CPC):
**B41J 2/16552; B41M 5/0023; C09D 11/107; C09D 11/322; C09D 11/38; C09D 11/40; C09D 11/54**

(86) International application number:
**PCT/JP2020/003496**

(87) International publication number:
**WO 2020/179301 (10.09.2020 Gazette 2020/37)**

(54) **INK SET, AND IMAGE RECORDING METHOD**

TINTENSATZ UND BILDAUFZEICHNUNGSVERFAHREN

ENSEMBLE D’ENCRES ET PROCÉDÉ D’IMPRESSION D’IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2019 JP 2019040430**
**22.01.2020 JP 2020008311**

(43) Date of publication of application:
**12.01.2022 Bulletin 2022/02**

(73) Proprietor: **FUJIFILM Corporation**
**Tokyo 106-8620 (JP)**

(72) Inventors:
- **FUJII, Yusuke**
**Ashigarakami-gun, Kanagawa 258-8577 (JP)**
- **SATO, Ayato**
**Ashigarakami-gun, Kanagawa 258-8577 (JP)**

(74) Representative: **Klunker IP Patentanwälte PartG mbB**
**Lessingstraße 11**
**80336 München (DE)**

(56) References cited:
**EP-A1- 3 889 228**
**JP-A- 2009 196 293**
**JP-A- 2011 063 658**
**JP-A- 2014 070 201**
**JP-A- 2014 095 057**
**JP-A- 2017 189 889**
**JP-A- 2018 095 841**
**US-A1- 2007 132 807**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND OF THE INVENTION

1. Field of the Invention

The present disclosure relates to an ink set and an image recording method.

2. Description of the Related Art

In the related art, research has been conducted on a maintenance liquid used for maintenance (for example, washing or cleaning) of an ink jet head.

For example, JP2007-169314A discloses, as a new maintenance liquid for ink jet recording with excellent antifoaming and antiseptic and antifungal effects which exhibits excellent washability even in a case of being applied to an ink jet printer that uses a pigment ink having a high coloring agent concentration and can be used for an ink jet printer of the related art without damaging members, a maintenance liquid for ink jet recording, containing at least water, a resin solvent that is insoluble or sparingly soluble in water, a surfactant that solubilizes and/or emulsifies the resin solvent in water, and a moisturizing agent.

Further, JP2014-95057A discloses, as a washing liquid for an ink jet device which suppresses adverse effects on jetting stability on a head, a washing liquid for an inkjet device, containing a polyol in which the dissolution amount in water in a standard state (25°C, 1 atm) is 10 wt% or less.

Further, JP2008-214525A discloses, as a new maintenance liquid for ink jet recording with excellent antifoaming and antiseptic and antifungal effects which exhibits excellent washability even in a case of being applied to an ink jet printer that uses a pigment ink having a high coloring agent concentration and can be used for an ink jet printer of the related art without damaging members, a maintenance liquid for ink jet recording, containing water, a plasticizer, and a moisturizing agent.

Further, JP2017-189889A discloses, as a maintenance method for an ink jet head capable of eliminating jetting failure of a nozzle surface due to a reaction solution, a maintenance method for an ink jet head, comprising at least any of a maintenance step of attaching a maintenance liquid to a nozzle surface of an ink jet head used to jet a reaction solution containing an aggregating agent that aggregates or thickens components of an ink composition to clean the nozzle surface or a maintenance step of covering the nozzle surface with a head moisturizing cap to which the maintenance liquid has been supplied to moisturize the nozzle surface, in which the maintenance liquid contains a water-soluble organic solvent having a boiling point of 280°C or lower and water.

Further, US 2007/132807 A1 teaches a maintenance liquid for ink jet recording, comprising water, a resin solvent, and a moisturizing agent.

JP 2011-063658 A discloses an ink set, which should be capable of securing a long-term discharge reliability, and should further be capable of forming a high quality image with excellent blocking resistance of a printed matter. This document further discloses an image forming method. The ink set disclosed in this document contains an ink composition that contains a pigment, polymer particles whose glass transition temperature is 50°C or more, and at least either amino acid or an amino acid derivative; and a maintenance liquid.

EP 3889228 A1 relates to an inkjet ink composition and applications thereof, in which both rub resistance of an image recorded on an impermeable base material and removability of the inkjet ink composition from a nozzle surface of an ink jet head are achieved. The inkjet ink composition is an inkjet ink composition including water (A), a resin (B), and an organic solvent (C) which has a boiling point of 250°C or lower, satisfies Expression (CI), and has a nitrogen atom, in which a content mass ratio of the organic solvent (C) to a main resin in the resin (B) is 0.01 or greater and less than 2.0. In Expression (C1), SPB represents an SP value of the main resin in the resin (B) in a unit of $MPa^{1/2}$, SPC represents an SP value of the organic solvent (C) in the unit of $MPa^{1/2}$, and |SPC - SPB| represents an absolute value of a difference between SPC and SPB. SPC-SPB≤10.0.

## SUMMARY OF THE INVENTION

Meanwhile, in image recording using an ink jet method, from the viewpoint of increasing the speed of image recording, an inkjet ink having excellent drying properties, which does not substantially contain an organic solvent having a high boiling point, is used in some cases. The inkjet ink having excellent drying properties is quickly dried on a base material, and thus an ink film which is a dried substance of the inkjet ink is formed. In this manner, the inkjet ink contributes to high-speed image recording.

However, the inkjet ink having excellent drying properties is quickly dried not only on a base material but also on a nozzle surface of an ink jet head (that is, the surface from which the inkjet ink is jetted, and the same applies hereinafter) to

form a dried substance (for example, an ink film). Therefore, the inkjet ink having excellent drying properties is also an ink that is unlikely to be removed from the nozzle surface.

Based on the research conducted by the present inventors, it was found that in a case where a maintenance liquid containing a specific organic solvent with hydrophobic properties is used for an inkjet ink having excellent drying properties, the removability of the inkjet ink and/or a dried substance thereof from a nozzle surface can be improved.

However, based on further research conducted by the present inventors, it was also found that in the case where a maintenance liquid containing a specific organic solvent with hydrophobic properties is used, the jetting stability in a case of allowing the inkjet ink to be jetted from an ink jet head after the removal may be impaired.

In JP2007-169314A, JP2014-95057A, JP2008-214525A, and JP2017-189889A, these problems in the case where the inkjet ink having excellent drying properties is used are not considered at all.

An object of an aspect of the present invention is to provide an ink set capable of performing image recording with excellent removability in a case where at least one of an inkjet ink or a dried substance thereof attached to a nozzle surface of an ink jet head despite using the inkjet ink having excellent drying properties is removed by the maintenance liquid and with excellent jetting stability in a case of allowing the inkjet ink to be jetted from the ink jet head after the removal, and an image recording method using the ink set.

The present invention is defined in the appended claims.

According to the present invention, it is possible to provide an ink set capable of performing image recording with excellent removability in a case where at least one of an inkjet ink or a dried substance thereof attached to a nozzle surface of an ink jet head despite using the inkjet ink having excellent drying properties is removed by the maintenance liquid and with excellent jetting stability in a case of allowing the inkjet ink to be jetted from the ink jet head after the removal, and an image recording method using the ink set.

## DESCRIPTION OF THE PREFERRED EMBODIMENTS

In the present disclosure, a numerical range shown using "to" indicates a range including the numerical values described before and after "to" as a lower limit and an upper limit.

In the present disclosure, in a case where a plurality of substances corresponding to respective components in a composition are present, the amount of the respective components in the composition indicates the total amount of the plurality of substances present in the composition unless otherwise specified.

In a numerical range described in a stepwise manner in the present disclosure, an upper limit or a lower limit described in a certain numerical range may be replaced with an upper limit or a lower limit in another numerical range described in a stepwise manner or a value described in an example.

In the present disclosure, the meaning of the term "step" includes not only an independent step but also a step whose intended purpose is achieved even in a case where the step is not clearly distinguished from other steps.

In the present disclosure, a combination of preferred embodiments is a more preferred embodiment.

In the present disclosure, the concept "(meth)acrylic acid" includes both acrylic acid and methacrylic acid, the concept "(meth)acrylate" includes both acrylate and methacrylate, the concept "(meth)acrylamide" includes both acrylamide and methacrylamide, and the concept "(meth)acryloyl group" includes both an acryloyl group and a methacryloyl group.

[Ink set]

An ink set of the present invention comprises an inkjet ink (hereinafter, also simply referred to as an "ink") which contains a pigment, a resin dispersant, and water and in which the content of an organic solvent having a boiling point of higher than 210°C is less than 1% by mass; and a maintenance liquid which contains water, a solvent MA, and a solvent MB.

The solvent MA is an organic solvent which is formed of a hydrophilic portion that is at least one selected from the group consisting of -OH, $-OCH_2CH_2OH$, $-OCH_2CHCH_3OH$, $-OCH_2CH_2-$, $-OCH_2CHCH_3-$, -COOH, -OC(=O)-, -OC(=O)O-, -NHC(=O)O-, -NHC(=O)NH-, -O-, $-NH_2$, -NH-, -CN, and $-NO_2$ and a hydrophobic portion that is a portion other than the hydrophilic portion and in which an MA value represented by Formula (MA) is 5.8 or less.

The solvent MB is at least one selected from the group consisting of glycerin, ethylene glycol, diethylene glycol, triethylene glycol, tetraethylene glycol, propylene glycol, dipropylene glycol, tripropylene glycol, and tetrapropylene glycol.

The content of the solvent MA is in a range of 0.5% by mass to 10% by mass with respect to the total amount of the maintenance liquid.

$$\text{MA value} = 7 + 4.02 \times \log(\text{molecular weight W}/\text{molecular weight O}) \ldots \text{Formula (MA)}$$

In Formula (MA), the molecular weight W represents a molecular weight of the hydrophilic portion, and the molecular weight O represents a molecular weight of the hydrophobic portion.

According to the ink set of the present invention, it is possible to perform image recording with excellent removability (hereinafter, also referred to as "ink removability" or simply referred to as "removability") in a case where at least one of an inkjet ink or a dried substance thereof attached to a nozzle surface of an ink jet head despite using the ink having excellent drying properties is removed by the maintenance liquid and with excellent jetting stability (hereinafter, also referred to as "jetting stability after removal of the ink" or simply referred to as "jetting stability after removal") in a case of allowing the inkjet ink to be jetted from the ink jet head after the removal.

The reason why the above-described effects are exhibited due to the ink set of the present invention is assumed as follows.

The fact that the content of the organic solvent having a boiling point of higher than 210°C is less than 1% by mass with respect to the amount of the ink (that is, roughly speaking, the ink does not substantially contain an organic solvent having a boiling point of higher than 210°C) is considered to contribute to the drying properties of the ink. The ink is quickly dried on a base material on which an image is recorded, and thus an ink film which is a dried substance of the ink is quickly formed on the base material. That is, the ink contributes to high-speed image recording.

However, the ink is quickly dried even on a nozzle surface of an ink jet head, and thus a dried substance (for example, an ink film) is also quickly formed on the nozzle surface. Therefore, the ink is disadvantageous in terms of the removability from a nozzle surface.

The ink set of the present invention has excellent removability in a case where the ink and/or the dried substance thereof (for example, an ink film) is removed from the nozzle surface using the maintenance liquid even though the ink set comprises the above-described ink that is disadvantageous in terms of the removability from the nozzle surface.

It is considered that the solvent MA having an MA value of 5.8 or less which is contained in the maintenance liquid of the present invention contributes to such effects of the removability. Here, roughly speaking, the solvent MA having an MA value of 5.8 or less indicates that the solvent MA is a hydrophobic organic solvent. It is considered that in a case where the ink and/or the dried substance thereof is removed from the nozzle surface using the maintenance liquid, the removability of the ink and/or the dried substance thereof from the nozzle surface is improved due to the interaction between the hydrophobic solvent MA contained in the maintenance liquid and the resin dispersant contained in the ink and/or the dried substance thereof. It is considered that the effects of the solvent MA described above are exhibited since the content of the solvent MA is 0.5% by mass or greater with respect to the total amount of the maintenance liquid.

Further, based on the research conducted by the present inventors, it was also found that in a case where the ink and/or the dried substance thereof (for example, an ink film) is removed from the nozzle surface using the maintenance liquid, the removability of the ink and/or the dried substance from the nozzle surface is excellent, but the jetting stability in a case of allowing the ink to be jetted from an ink jet head after the removal may be impaired (for example, jetting failure occurs).

The reason for this is considered as follows.

It is considered that the dispersion stability of the pigment and the jetting stability of the ink are ensured due to the interaction between the pigment and the resin dispersant in the ink that is not in contact with the maintenance liquid. However, it is considered that in a case where the ink and/or the dried substance thereof (for example, an ink film) is removed from the nozzle surface using the maintenance liquid containing the hydrophobic solvent MA, the interaction between the solvent MA that is a component in the maintenance liquid and the resin dispersant in the ink and/or the dried substance thereof in the maintenance liquid applied to the nozzle surface weakens the interaction between the pigment and the resin dispersant, and thus coarse particles that are aggregates of the pigment are likely to be formed. It is considered that since the formed coarse particles remain on the nozzle surface, a decrease in jetting stability (for example, jetting failure) of the ink is caused.

In the ink set of the present invention, the jetting stability in a case of allowing the ink to be jetted from the ink jet head after the removal is also excellent (that is, the jetting failure and the like can be suppressed) even though the maintenance liquid contains the solvent MA described above.

The fact that the content of the solvent MA is limited to 10% by mass or less with respect to the total amount of the maintenance liquid and the maintenance liquid contains the solvent MB which is at least one selected from the group consisting of glycerin, ethylene glycol, diethylene glycol, triethylene glycol, tetraethylene glycol, propylene glycol, dipropylene glycol, tripropylene glycol, and tetrapropylene glycol contributes to such effects of the jetting stability.

The solvent MB is, roughly speaking, a hydrophilic organic solvent.

It is considered that since the maintenance liquid contains the solvent MB and the content of the solvent MA is limited to 10% by mass or less with respect to the total amount of the maintenance liquid, the aggregation of the pigment (that is, the formation of coarse particles) in the maintenance liquid applied to the nozzle surface is suppressed, and a decrease in j etting stability (for example, jetting failure) of the ink is suppressed.

That is, it is considered that in the ink set of the present invention, the effects of the removability of the ink and/or the dried substance thereof due to the hydrophobic solvent MA are obtained because the maintenance liquid contains the

hydrophobic solvent MA and the hydrophilic solvent MB, and a decrease in jetting stability (for example, jetting failure) of the ink is also suppressed because of the limitation of the content of the solvent MA to 10% by mass or less and the action of the solvent MB.

The ink set of the present invention may comprise only one or two or more kinds of inks.

Further, the ink set of the present invention may comprise only one or two or more kinds of maintenance liquids.

As a preferred embodiment of the ink set of the present invention, an embodiment of the ink set comprising two or more kinds of inks and one or more kinds of maintenance liquids is exemplified.

According to such an embodiment, a multicolor image can be recorded.

Examples of two or more kinds of inks include three kinds of inks consisting of a cyan ink, a magenta ink, and a yellow ink; four kinds of inks consisting of a cyan ink, a magenta ink, a yellow ink, and a black ink; four or more kinds of inks consisting of the above-described three kinds of colored inks and at least one selected from a white ink, a green ink, an orange ink, a violet ink, a light cyan ink, a light magenta ink, and a light yellow ink; and five or more kinds of inks consisting of the above-described four kinds of colored inks and at least one selected from a white ink, a green ink, an orange ink, a violet ink, a light cyan ink, a light magenta ink, and a light yellow ink.

However, two or more kinds of inks are not limited to these specific examples.

Further, the ink set of the present invention may further comprise at least one kind of pretreatment liquid described below.

<Ink>

The ink set of the present invention comprises at least one kind of ink (that is, an inkjet ink).

The ink in the ink set of the present invention contains a pigment, a resin dispersant, and water, and the content of the organic solvent having a boiling point of higher than 210°C is less than 1% by mass.

(Organic solvent having boiling point of higher than 210°C)

**In** the ink of the present invention, the content of the organic solvent having a boiling point of higher than 210°C is less than 1% by mass. **In** this manner, the drying properties of the ink are enhanced.

Here, the fact that the content of the organic solvent having a boiling point of higher than 210°C in the ink is less than 1% by mass indicates that the ink does not contain the organic solvent having a boiling point of higher than 210°C or even in a case where the ink contains the organic solvent, the content of the organic solvent having a boiling point of higher than 210°C is less than 1% by mass with respect to the total amount of the ink.

The fact that the content of the organic solvent having a boiling point of higher than 210°C in the ink is less than 1% by mass roughly indicates that the ink does not substantially contain the organic solvent having a boiling point of higher than 210°C.

**In** the present disclosure, the "boiling point" indicates a boiling point at 1 atm (101325 Pa).

Examples of the organic solvent having a boiling point of higher than 210°C include glycerin (boiling point of 290°C), 1,2-hexanediol (boiling point of 223°C), 1,3-propanediol (boiling point of 213°C), diethylene glycol (boiling point of 245°C), diethylene glycol monobutyl ether (boiling point of 230°C), triethylene glycol (boiling point of 285°C), dipropylene glycol (boiling point of 232°C), tripropylene glycol (boiling point 267°C), trimethylolpropane (boiling point of 295°C), 2-pyrrolidone (boiling point of 245°C), tripropylene glycol monomethyl ether (boiling point of 243°C), and triethylene glycol monomethyl ether (boiling point of 248°C).

(Water)

The ink contains water.

The content of water is preferably 40% by mass or greater, more preferably 50% by mass or greater, and still more preferably 60% by mass or greater with respect to the total amount of the ink.

The upper limit of the content of water depends on the amount of other components, but is preferably 90% by mass or less and more preferably 80% by mass or less with respect to the total amount of the ink.

(Water-soluble organic solvent having boiling point of 210°C or lower)

It is preferable that the ink contains at least one water-soluble organic solvent having a boiling point of 210°C or lower.

**In** this manner, the jettability of the ink can be further improved.

In the present disclosure, the term "water-soluble" indicates a property that 1 g or greater (preferably 5 g or greater and more preferably 10 g or greater) of a substance is dissolved in 100 g of water at 25°C.

Examples of the water-soluble organic solvent having a boiling point of 210°C or lower include propylene glycol (boiling point of 188°C), propylene glycol monomethyl ether (boiling point of 121°C), ethylene glycol (boiling point of 197°C), ethylene glycol monomethyl ether (boiling point of 124°C), propylene glycol monoethyl ether (boiling point of 133°C), ethylene glycol monoethyl ether (boiling point of 135°C), propylene glycol monopropyl ether (boiling point of 149°C), ethylene glycol monopropyl ether (boiling point of 151°C), propylene glycol monobutyl ether (boiling point of 170°C), ethylene glycol monobutyl ether (boiling point of 171°C), 2-ethyl-1-hexanol (boiling point of 187°C), dipropylene glycol monomethyl ether (boiling point of 188°C), diethylene glycol dimethyl ether (boiling point of 162°C), diethylene glycol diethyl ether (boiling point of 188°C), and dipropylene glycol dimethyl ether (boiling point of 175°C).

In a case where the ink contains a water-soluble organic solvent having a boiling point of 210°C or lower, the content of the water-soluble organic solvent having a boiling point of 210°C or lower is preferably in a range of 1% by mass to 30% by mass, more preferably in a range of 5% by mass to 30% by mass, still more preferably in a range of 10% by mass to 30% by mass, and even still more preferably in a range of 15% by mass to 25% by mass with respect to the total amount of the ink.

(Pigment)

The ink contains at least one pigment.

The kind of the pigment is not particularly limited, and known organic and inorganic pigments of the related art can be used as the pigment. Examples of the pigment include a polycyclic pigment such as azo lake, an azo pigment, a phthalocyanine pigment, a perylene pigment, a perinone pigment, an anthraquinone pigment, a quinacridone pigment, a dioxazine pigment, a diketopyrrolopyrrole pigment, a thioindigo pigment, an isoindolinone pigment, or a quinophthalone pigment; a lake dye such as a basic dye-type lake or an acidic dye-type lake; an organic pigment such as a nitro pigment, a nitroso pigment, aniline black, or a daylight fluorescent pigment; and an inorganic pigment such as titanium oxide, an iron oxide-based pigment, or a carbon black-based pigment. Further, even pigments which are not described in Color Index can be used as long as the pigments can be dispersed in a water phase. Further, the pigments which are surface-treated with a surfactant, a polymer dispersant, or the like and graft carbon or the like can also be used. Among these pigments, an azo pigment, a phthalocyanine pigment, an anthraquinone pigment, a quinacridone pigment, and a carbon black-based pigment are particularly preferable. Specific examples thereof include pigments described in JP2007-100071A.

(Resin dispersant)

The ink contains at least one resin dispersant.

As the resin dispersant, a water-insoluble resin is preferable.

Here, the term "water-insoluble" indicates that in a case where a resin is mixed with water at 25°C, the amount of the resin to be dissolved in water is 10% by mass or less with respect to the total amount of the mixed resin in terms of the mass ratio.

As the resin dispersant, for example, the water-insoluble polymers described in paragraphs 0078 to 0108 of WO2013/180074A can be used.

As the resin dispersant, an acrylic resin is preferable.

In the present disclosure, the acrylic resin indicates a polymer (a homopolymer or a copolymer) of a raw material monomer containing at least one selected from the group consisting of acrylic acid, a derivative of acrylic acid (such as acrylic acid ester), methacrylic acid, and a derivative of methacrylic acid (such as methacrylic acid ester).

As the resin dispersant, an acrylic resin having at least one selected from the group consisting of a structural unit derived from benzyl (meth)acrylate and a structural unit derived from phenoxyethyl (meth)acrylate, and a structural unit derived from (meth)acrylic acid is more preferable, and an acrylic resin having at least one selected from the group consisting of a structural unit derived from benzyl (meth)acrylate and a structural unit derived from phenoxyethyl (meth) acrylate, a structural unit derived from (meth)acrylic acid, and a structural unit derived from alkyl (meth)acrylate that contains an alkyl group having 1 to 4 carbon atoms is still more preferable.

Here, the structural unit derived from benzyl (meth)acrylate indicates a structural unit formed by polymerization of benzyl (meth)acrylate (the same applies to other structural units).

In the description below, the structural unit derived from benzyl (meth)acrylate may be referred to as a benzyl (meth)acrylate unit (the same applies to other structural units).

The total content of the benzyl (meth)acrylate unit and the phenoxyethyl (meth)acrylate unit in the resin dispersant is preferably in a range of 20% by mass to 80% by mass, more preferably in a range of 30% by mass to 75% by mass, and still more preferably in a range of 50% by mass to 75% by mass with respect to the total amount of the resin dispersant.

The total content of the benzyl (meth)acrylate unit, the phenoxyethyl (meth)acrylate unit, and the alkyl (meth) acrylate unit that contains an alkyl group having 1 to 4 carbon atoms in the resin dispersant is preferably in a range of 80%

by mass to 98% by mass, more preferably in a range of 85% by mass to 97% by mass, and still more preferably in a range of 90% by mass to 97% by mass with respect to the total amount of the resin dispersant.

The content of the (meth)acrylic acid unit in the resin dispersant is preferably in a range of 2% by mass to 20% by mass, more preferably in a range of 3% by mass to 15% by mass, and still more preferably in a range of 3% by mass to 10% by mass with respect to the total amount of the resin dispersant.

Hereinafter, specific examples of the resin dispersant will be described. However, the present disclosure is not limited to the examples described below.

- · Phenoxyethyl acrylate/methyl methacrylate/acrylic acid copolymer (50/45/5 [mass ratio])
- · Phenoxyethyl acrylate/benzyl methacrylate/isobutyl methacrylate/methacrylic acid copolymer (30/35/29/6 [mass ratio])
- · Phenoxyethyl methacrylate/isobutyl methacrylate/methacrylic acid copolymer (50/44/6 [mass ratio])
- · Phenoxyethyl acrylate/methyl methacrylate/ethyl acrylate/acrylic acid copolymer (30/55/10/5 [mass ratio])
- · Benzyl methacrylate/methyl methacrylate/methacrylic acid copolymer (60/30/10 [mass ratio])

From the viewpoints of the pigment dispersibility and the storage stability, the acid value of the resin dispersant is preferably in a range of 30 mgKOH/g to 100 mgKOH/g, more preferably in a range of 30 mgKOH/g to 85 mgKOH/g, and still more preferably in a range of 50 mgKOH/g to 85 mgKOH/g.

In the present disclosure, the acid value is defined as the mass (mg) of KOH required to completely neutralize 1 g of a resin and is measured by the method described in JIS standard (JIS K 0070, 1992).

The weight-average molecular weight (Mw) of the resin dispersant is preferably 30000 or greater, more preferably in a range of 30000 to 150000, still more preferably in a range of 30000 to 100000, and even still more preferably in a range of 30000 to 80000.

In the present disclosure, the weight-average molecular weight (Mw) indicates a value measured according to gel permeation chromatography (GPC) unless otherwise specified.

The measurement according to gel permeation chromatography (GPC) is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID × 15 cm), and tetrahydrofuran (THF) as an eluent. Further, the measurement is performed under measurement conditions of a sample concentration of 0.45% by mass, a flow rate of 0.35 ml/min, a sample injection volume of 10 μl, and a measurement temperature of 40°C using an RI detector.

Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

The content of the pigment in the ink of the present invention is preferably in a range of 1% by mass to 20% by mass, more preferably in a range of 1% by mass to 15% by mass, and still more preferably in a range of 1% by mass to 10% by mass with respect to the total amount of the ink.

The content of the resin dispersant in the ink of the present invention is preferably in a range of 1% by mass to 25% by mass, more preferably in a range of 1% by mass to 20% by mass, still more preferably in a range of 1% by mass to 15% by mass, and even still more preferably in a range of 2% by mass to 10% by mass with respect to the total amount of the ink.

The ratio of the pigment (D) to the resin dispersant (P) (that is, the D/P ratio) in the ink of the present invention is preferably in a range of 0.06 to 3, more preferably in a range of 0.125 to 2, still more preferably in a range of 0.25 to 1, and even still more preferably in a range of 0.25 to 0.6.

In a case where the D/P ratio is 0.06 or greater, the dispersion stability of the ink and the rub resistance of the image are further improved.

In a case where the D/P ratio is 3 or less, the dispersion stability of the ink is further improved.

(Resin particles)

It is preferable that the ink contains at least one kind of resin particles.

That is, it is preferable that the ink contains resin particles which are particles formed of a resin, in addition to the resin dispersant.

In this manner, the intensity of an image to be recorded is increased, and the rub resistance of the image is improved.

Further, in a case where an image is recorded using a pretreatment liquid described below, the ink thickens due to aggregation or dispersion destabilization of the resin particles in the ink in a case where the resin particles in the ink are brought into contact with the aggregating agent in the pretreatment liquid on the base material. In this manner, the image quality of the image is improved, and the speed of image recording is increased.

Meanwhile, in a case where the ink contains resin particles, not only the intensity of the image to be recorded on the base material but also the intensity of the ink film to be formed on the nozzle surface are increased. Therefore, the containing of resin particles in the ink tends to be disadvantageous in terms of the removability from the nozzle surface.

However, in a case where the ink set of the present invention is used, the removability of the ink from the nozzle surface is ensured even in a case where the ink contains resin particles by removing the ink using the maintenance liquid containing the solvent MA.

A water-insoluble resin is also preferable as a resin constituting the resin particles.

It is preferable that the resin particles include at least one of particles formed of an acrylic resin (hereinafter, also referred to as acrylic resin particles) or particles formed of a polyurethane resin (hereinafter, also referred to as polyurethane resin particles).

The meaning of the acrylic resin in the present disclosure is as described above.

In the present disclosure, the polyurethane resin indicates a polymer compound having a urethane bond in the main chain.

From the viewpoint of further improving the adhesiveness and the rub resistance of the image, it is preferable that the resin particles contained in the ink include acrylic resin particles.

In a case where the resin particles contained in the ink include acrylic resin particles, the proportion of the acrylic resin particles in the resin particles contained in the ink is preferably 60% by mass or greater, more preferably 80% by mass or greater, and still more preferably 90% by mass or greater.

In a case where the proportion of the acrylic resin particles in the resin particles contained in the ink is 60% by mass or greater, the adhesiveness of the image is further improved.

As the resin particles, resin particles which are self-dispersing resin particles are also preferable.

Examples of the self-dispersing resin particles include self-dispersing polymer particles described in paragraphs 0062 to 0076 of JP2016-188345A and paragraphs 0109 to 0140 of WO2013/180074A.

As the resin in resin particles, an acrylic resin having at least one selected from the group consisting of a benzyl (meth)acrylate unit, a phenoxyethyl (meth)acrylate unit, and a cyclic aliphatic group-containing (meth)acrylate unit, and a (meth)acrylic acid unit is more preferable, and an acrylic resin having at least one selected from the group consisting of a benzyl (meth)acrylate unit, a phenoxyethyl (meth)acrylate unit, and a cyclic aliphatic group-containing (meth)acrylate unit, a (meth)acrylic acid unit, and an alkyl (meth)acrylate unit that contains an alkyl group having 1 to 4 carbon atoms is still more preferable.

As the cyclic aliphatic group-containing (meth)acrylate, at least one selected from alkyl (meth)acrylate containing a cycloalkyl group having 3 to 10 carbon atoms (such as cyclohexyl (meth)acrylate), isobornyl (meth)acrylate, adamantyl (meth)acrylate, or dicyclopentanyl (meth)acrylate is preferable, and at least one selected from isobornyl (meth)acrylate, adamantyl (meth)acrylate, or dicyclopentanyl (meth)acrylate is more preferable.

In the resin in the resin particles, the total content of the benzyl (meth)acrylate unit, the phenoxyethyl (meth) acrylate unit, and the cyclic aliphatic group-containing (meth)acrylate unit is preferably in a range of 20% by mass to 80% by mass and more preferably in a range of 30% by mass to 75% by mass with respect to the total amount of the resin dispersant.

**In** the resin in the resin particles, the total content of the benzyl (meth)acrylate unit, the phenoxyethyl (meth) acrylate unit, the cyclic aliphatic group-containing (meth)acrylate unit, and the alkyl (meth)acrylate unit containing an alkyl group having 1 to 4 carbon atoms is preferably in a range of 80% by mass to 98% by mass, more preferably in a range of 85% by mass to 97% by mass, and still more preferably in a range of 90% by mass to 95% by mass with respect to the total amount of the resin dispersant.

**In** the resin in the resin particles, the content of the (meth)acrylic acid unit is preferably in a range of 2% by mass to 20% by mass, more preferably in a range of 3% by mass to 15% by mass, and still more preferably in a range of 5% by mass to 10% by mass with respect to the total amount of the resin dispersant.

Specific examples of the resin in the resin particles include a phenoxyethyl acrylate/methyl methacrylate/acrylic acid copolymer (50/45/5), a phenoxyethyl acrylate/benzyl methacrylate/isobutyl methacrylate/methacrylic acid copolymer (30/35/29/6), a phenoxyethyl methacrylate/isobutyl methacrylate/methacrylic acid copolymer (50/44/6), a phenoxyethyl acrylate/methyl methacrylate/ethyl acrylate/acrylic acid copolymer (30/55/10/5), a benzyl methacrylate/isobutyl methacrylate/methacrylic acid copolymer (35/59/6), a styrene/phenoxyethyl acrylate/methyl methacrylate/acrylic acid copolymer (10/50/35/5), a benzyl acrylate/methyl methacrylate/acrylic acid copolymer (55/40/5), a phenoxyethyl methacrylate/benzyl acrylate/methacrylic acid copolymer (45/47/8), a styrene/phenoxyethyl acrylate/butyl methacrylate/acrylic acid copolymer (5/48/40/7), a benzyl methacrylate/isobutyl methacrylate/cyclohexyl methacrylate/methacrylic acid copolymer (35/30/30/5), a phenoxyethyl acrylate/methyl methacrylate/butyl acrylate/methacrylic acid copolymer (12/50/30/8), a benzyl acrylate/isobutyl methacrylate/acrylic acid copolymer (93/2/5), a methyl methacrylate/methoxyethyl acrylate/benzyl methacrylate/acrylic acid copolymer (44/15/35/6), a styrene/butyl acrylate/acrylic acid copolymer (62/35/3), a methyl methacrylate/phenoxyethyl acrylate/acrylic acid copolymer (45/51/4), a methyl methacrylate/isobornyl methacrylate/methacrylic acid copolymer (20/72/8), a methyl methacrylate/isobornyl methacrylate/methacrylic acid

copolymer (40/52/8), a methyl methacrylate/isobornyl methacrylate/methacrylic acid copolymer (48/42/10), a methyl methacrylate/isobornyl methacrylate/dicyclopentanyl methacrylate/methacrylic acid copolymer (20/62/10/8), and a methyl methacrylate/dicyclopentanyl methacrylate/methacrylic acid copolymer (20/72/8).

Further, the values in the parentheses indicate the mass ratios of the copolymer components.

From the viewpoint of the self-dispersibility, the aggregating properties in a case of image recording, and the like, the acid value of the resin in the resin particles is preferably in a range of 25 mgKOH/g to 100 mgKOH/g, more preferably in a range of 30 mgKOH/g to 90 mgKOH/g, and still more preferably in a range of 35 mgKOH/g to 80 mgKOH/g.

The weight-average molecular weight of the resin in the resin particles is preferably in a range of 1000 to 300000, more preferably in a range of 2000 to 200000, and still more preferably in a range of 5000 to 100000.

The weight-average molecular weight is measured by gel permeation chromatography (GPC). The details of GPC are as described above.

The volume average particle diameter of the resin particles is preferably in a range of 1 nm to 200 nm, more preferably in a range of 3 nm to 200 nm, and still more preferably in a range of 5 nm to 50 nm.

In the present disclosure, the volume average particle diameter indicates a value measured using a laser diffraction scattering particle size distribution analyzer.

As a measuring device, a particle size distribution measuring device "MICROTRAC MT-3300II" (manufactured by Nikkiso Co., Ltd.) is exemplified.

The glass transition temperature ($T_g$) of the resin particles is not particularly limited.

From the viewpoint of further improving the rub resistance of the image and the latency of image recording, the glass transition temperature ($T_g$) of the resin particles is preferably 20°C or higher, more preferably 50°C or higher, and still more preferably 80°C or higher.

From the viewpoint of the manufacturing suitability of the resin particles, the glass transition temperature ($T_g$) of the resin particles is preferably 150°C or lower and more preferably 130°C or lower.

Here, the improvement of the latency of image recording indicates that in a case where the image recording is paused and then resumed, the number of droplets until the normal image recording state is returned can be reduced.

In the present disclosure, the glass transition temperature of the resin particles indicates a value measured using differential scanning calorimetry (DSC).

Specifically, the glass transition temperature is measured in conformity with the method described in JIS K 7121 (1987) or JIS K 6240 (2011).

The glass transition temperature in the present disclosure is an extrapolated glass transition start temperature (hereinafter, also referred to as Tig).

The method of measuring the glass transition temperature will be described in more detail.

In a case where the glass transition temperature is acquired, the resin particles are maintained at a temperature lower than the expected glass transition temperature of the resin particles by approximately 50°C until the device is stabilized, the resin particles are heated to a temperature higher than the temperature at which the glass transition is completed by approximately 30°C at a heating rate of 20°C/min, and a differential thermal analysis (DTA) curve or a DSC curve is created.

The extrapolated glass transition start temperature (Tig), that is, the glass transition temperature in the present disclosure is acquired as the temperature of the intersection between a straight line obtained by extending the base line on a low temperature side in the DTA curve or the DSC curve onto a high temperature side and a tangent drawn at a point where the gradient of a curve from a step-like change portion of the glass transition is maximized.

Further, in the present disclosure, in a case where the ink contains two or more kinds of resin particles, the glass transition temperature ($T_{gp}$) of the resin particles contained in the ink indicates the weighted average value of the glass transition temperatures of individual resin particles contained in the ink.

Here, the weighted average value of the glass transition temperatures of individual resin particles contained in the ink can be acquired by Mathematical Formula 1.

Specifically, the weighted average value of the glass transition temperatures of individual resin particles contained in the ink can be calculated as X in Mathematical Formula 1 by substituting the glass transition temperature of the i-th (i represents an integer of 1 or greater) resin particle contained in the ink for $S_i$ and substituting the mass fraction of the i-th resin particle in the entirety of the resin particles contained in the ink for $W_i$ in Mathematical Formula 1.
[Mathematical Formula 1]

$$X = \frac{\sum S_i W_i}{\sum W_i} \quad \text{(Mathematical Formula 1)}$$

In a case where the ink contains resin particles, the content of the resin particles is preferably in a range of 1% by mass to 25% by mass, more preferably in a range of 2% by mass to 20% by mass, still more preferably in a range of 3% by mass to 15% by mass, and even still more preferably in a range of 3% by mass to 10% by mass with respect to the total amount of the ink.

In the case where the ink contains resin particles and the total content of the resin particles and the resin dispersant is set to X% by mass with respect to the total solid content of the ink, X is preferably 40 or greater and 85 or less, more preferably 50 or greater and less than 80, and still more preferably 50 or greater and 70 or less.

In a case where X is 40 or greater, the rub resistance of the image is further improved.

In a case where X is 85 or less, the ink removability is further improved.

(Other components)

The ink may contain components other than the components described above.

Examples of other components include known additives such as a surfactant, colloidal silica, urea, a urea derivative, a wax, a fading inhibitor, an emulsion stabilizer, a penetration enhancer, an ultraviolet absorbing agent, a preservative, an antibacterial agent, a pH adjuster, a surface tension adjuster, an antifoaming agent, a viscosity adjuster, a dispersion stabilizer, and a chelating agent.

(Preferable physical properties of ink)

The viscosity of the ink of the present disclosure is preferably in a range of 1.2 mPa·s to 15.0 mPa·s, more preferably 2 mPa·s or greater and less than 13 mPa·s, and still more preferably 2.5 mPa·s or greater and less than 10 mPa·s.

The viscosity is a value measured at 25°C using a viscometer.

As the viscometer, for example, a VISCOMETER TV-22 type viscometer (manufactured by Toki Sangyo Co., Ltd.) can be used.

The surface tension of the ink of the present disclosure is preferably in a range of 25 mN/m to 40 mN/m and more preferably in a range of 27 mN/m to 37 mN/m.

The surface tension is a value measured at a temperature of 25°C.

The surface tension can be measured using, for example, an Automatic Surface Tensiometer CBVP-Z (manufactured by Kyowa Interface Science Co., Ltd.).

From the viewpoint of the dispersion stability, the pH of the ink of the present invention at 25°C is preferably in a range of 6 to 11, more preferably in a range of 7 to 10, and still more preferably in a range of 7 to 9.

The pH of the ink at 25°C is measured using a commercially available pH meter.

<Maintenance liquid>

The ink set of the present invention contains at least one maintenance liquid which contains the solvent MA described below, the solvent MB described below, and water and in which the content of the solvent MA is in a range of 0.5% by mass to 10% by mass with respect to the total amount of the maintenance liquid.

The effects of improving the removability and improving the jetting stability after removal can be obtained by removing the ink and/or the dried substance thereof attached to the nozzle surface using the maintenance liquid.

As described above, it is considered that the solvent MA which is a hydrophobic organic solvent contributes to the effect of improving the removability and the solvent MB which is a hydrophilic organic solvent contributes to the effect of improving the jetting stability after removal.

(Solvent MA)

The maintenance liquid contains the solvent MA described below.

The solvent MA is an organic solvent which is formed of a hydrophilic portion that is at least one selected from the group consisting of -OH, $-OCH_2CH_2OH$, $-OCH_2CHCH_3OH$, $-OCH_2CH_2-$, $-OCH_2CHCH_3-$, -COOH, -OC(=O)-, -OC(=O)O-, -NHC(=O)O-, -NHC(=O)NH-, -O-, $-NH_2$, -NH-, -CN, and $-NO_2$ and a hydrophobic portion that is a portion other than the hydrophilic portion and in which an MA value represented by Formula (MA) is 5.8 or less.

The solvent MA (that is, the organic solvent having an MA value of 5.8 or less) contained in the maintenance liquid may be used alone or two or more kinds thereof.

$$\text{MA value} = 7 + 4.02 \times \log(\text{molecular weight W}/\text{molecular weight O}) \ldots \text{Formula (MA)}$$

In Formula (MA), the molecular weight W represents the molecular weight of the hydrophilic portion, and the molecular weight O represents the molecular weight of the hydrophobic portion.

The "log" in Formula (MA) indicates "$\log_{10}$" (common logarithm).

The MA value is obtained by dividing one molecule of an organic solvent into a hydrophilic portion and a hydrophobic portion and quantifying the degree of hydrophobicity of the organic solvent based on the ratio between both portions.

The hydrophobicity increases (that is, the hydrophilicity decreases) as the MA value decreases.

Since the solvent MA has an MA value of 5.8 or less, it can be said that the solvent MA is an organic solvent that is hydrophobic to some extent.

The meaning of each group in the above-described group that can constitute the hydrophilic portion is as follows.

- OH indicates a hydroxy group that is not included in any of the structures of a hydroxyethyloxy group, a 2-hydroxypropyloxy group, and a carboxy group.
- $OCH_2CH_2OH$ indicates a hydroxyethyloxy group.
- $OCH_2CHCH_3OH$ indicates a 2-hydroxypropyloxy group.
- $OCH_2CH_2$- indicates an ethyleneoxy group that is not included in any of the structures of a hydroxyalkyloxy group having 2 or more carbon atoms and an alkyleneoxy group having 3 or more carbon atoms.
- $OCH_2CHCH_3$- indicates a 1,2-propyleneoxy group that is not included in any of the structures of a hydroxyalkyloxy group having 3 or more carbon atoms and an alkyleneoxy group having 4 or more carbon atoms.
- COOH indicates a carboxy group.
- OC(=O)- indicates a carbonyloxy group that is not included in any of the structures of a carboxy group, an oxycarbonyloxy group, and -NHC(=O)O- described below.
- OC(=O)O- indicates an oxycarbonyloxy group.
- NHC(=O)O- indicates a urethane group.
- NHC(=O)NH- indicates a urea group.
- O- indicates an ether group that is not included in any of the structures of a hydroxy group, a hydroxyethyloxy group, a 2-hydroxypropyloxy group, an ethyleneoxy group, a 1,2-propyleneoxy group, a carboxy group, a carbonyloxy group, an oxycarbonyloxy group, and a urethane group.
- $NH_2$ indicates an amino group.
- NH- indicates an imino group that is not included in any of the structures of an amino group, a urethane group, and a urea group.
- CN indicates a cyano group.
- $NO_2$ indicates a nitro group.

The lower limit of the MA value in the solvent MA may be 3.0, 3.5, 3.7, or the like.

The content of the solvent MA (that is, the organic solvent having an MA value of 5.8 or less) in the maintenance liquid is in a range of 0.5% by mass to 10% by mass with respect to the total amount of the maintenance liquid.

It goes without saying that the content of the solvent MA here indicates the total content of two or more kinds of solvents MA in a case where the maintenance liquid contains two or more kinds of solvents MA.

Since the content of the solvent MA is 0.5% by mass or greater, the removability of the ink is improved.

Since the content of the solvent MA is 10% by mass or less, the jetting stability after removal of the ink is improved.

The content of the organic solvent having an MA value of 5.8 or less is preferably in a range of 1% by mass to 8% by mass, more preferably in a range of 2% by mass to 6% by mass, and still more preferably in a range of 3% by mass to 6% by mass with respect to the total amount of the maintenance liquid.

As described above, the hydrophilic portion of the solvent MA is at least one selected from the group consisting of

-OH, $-OCH_2CH_2OH$, $-OCH_2CHCH_3OH$, $-OCH_2CH_2-$, $-OCH_2CHCH_3-$, -COOH, -OC(=O)-, -OC(=O)O-, -NHC(=O)O-, -NHC(=O)NH-, -O-, $-NH_2$, -NH-, -CN, and $-NO_2$.

The hydrophilic portion in the solvent MA is preferably at least one selected from the group consisting of -OH, $-OCH_2CH_2OH$, and $-OCH_2CHCH_3OH$ and more preferably -OH.

As described above, the hydrophobic portion in the solvent MA is a portion other than the hydrophilic portion in one molecule of the solvent MA.

The hydrophobic portion in the solvent MA is preferably a hydrocarbon group and more preferably at least one selected from the group consisting of an alkyl group, an alkylene group, a trivalent chain hydrocarbon group, a tetravalent chain hydrocarbon group, an aryl group, an aralkyl group, and an alkylaryl group.

It is preferable that the organic solvent having an MA value of 5.8 or less is at least one selected from the group consisting of a monoalcohol compound and a dialcohol compound.

The number of carbon atoms of the monoalcohol compound is preferably 4 or greater, more preferably in a range of 4 to 10, and still more preferably in a range of 4 to 8.

The number of carbon atoms of the dialcohol compound is preferably 4 or greater, more preferably in a range of 4 to 10, and still more preferably in a range of 4 to 8.

In a case where the organic solvent having an MA value of 5.8 or less is at least one selected from the group consisting of a monoalcohol compound and a dialcohol compound, it is preferable that the organic solvent having an MA value of 5.8 or less includes at least one selected from the group consisting of octanol, 2-ethylhexanol, heptanol, hexanol, pentanol, butanol, 2-methyl-2-butanol, 2-ethyl-1,3-hexanediol, 1,8-octanediol, 2,2,4-trimethyl-1,3-pentanediol, 4-methylbenzyl alcohol, 1,7-heptanediol, 3-ethyl-3-oxetanemethanol, benzyl alcohol, 1,6-hexanediol, 3-methoxybutanol, and 1,5-pentanediol.

Here, the concept of each of octanol, heptanol, hexanol, pentanol, and butanol includes all isomers. For example, the concept of octanol includes 1-octanol, 2-octanol, 3-octanol, and 4-octanol.

The MA value of each compound will be described below.

The boiling point of the organic solvent (that is, the solvent MA) having an MA value of 5.8 or less is not particularly limited.

From the viewpoint of further improving the removability, the boiling point of the organic solvent having an MA value of 5.8 or less is preferably 70°C or higher and more preferably 100°C or higher.

The upper limit of the boiling point of the organic solvent having an MA value of 5.8 or less is not particularly limited, and the upper limit may be, for example, 300°C.

In a case where the solvent MA includes an organic solvent having an MA value of 5.8 or less and a boiling point of 100°C or higher, the solvent MA may further include an organic solvent having an MA value of 5.8 or less and a boiling point of lower than 100°C.

In the case where the solvent MA includes an organic solvent having an MA value of 5.8 or less and a boiling point of 100°C or higher, the content of the organic solvent having an MA value of 5.8 or less and a boiling point of 100°C or higher is in a range of 0.5% by mass to 10% by mass, preferably in a range of 1% by mass to 8% by mass, still more preferably in a range of 2% by mass to 6% by mass, and even more preferably in a range of 3% by mass to 6% by mass with respect to the total amount of the maintenance liquid.

From the viewpoint of further improving the removability, the solvent MA includes an organic solvent is formed of a hydrophilic portion and a hydrophobic portion and has an MA value of 5.0 or less and preferable that the solvent MA is an organic solvent formed of a hydrophilic portion and a hydrophobic portion and having an MA value of 5.0 or less.

Since the solvent MA includes an organic solvent formed of a hydrophilic portion and a hydrophobic portion and having an MA value of 5.0 or less, the maintenance liquid contains an organic solvent having an MA value of 5.0 or less and may contain an organic solvent having an MA value of greater than 5.0 and 5.8 or less.

Since the solvent MA includes an organic solvent having an MA value of 5.0 or less, the content of the organic solvent having an MA value of 5.0 or less is in a range of 0.5% by mass to 10% by mass, preferably in a range of 1% by mass to 8% by mass, more preferably in a range of 2% by mass to 6% by mass, and even more preferably in a range of 3% by mass to 6% by mass with respect to the total amount of the maintenance liquid.

From the viewpoint of further improving the removability, it is preferable that the solvent MA includes an organic solvent formed of a hydrophilic portion and a hydrophobic portion and having an MA value of 4.8 or less and more preferable that the solvent MA is an organic solvent formed of a hydrophilic portion and a hydrophobic portion and having an MA value of 4.8 or less.

**In** a case where the solvent MA includes an organic solvent formed of a hydrophilic portion and a hydrophobic portion and having an MA value of 4.8 or less, the maintenance liquid may contain an organic solvent having an MA value of 4.8 or less and an organic solvent having an MA value of greater than 4.8 and 5.8 or less.

**In** a case where the solvent MA includes an organic solvent having an MA value of 4.8 or less, the content of the organic solvent having an MA value of 4.8 or less is preferably in a range of 0.5% by mass to 10% by mass, more preferably in a range of 1% by mass to 8% by mass, still more preferably in a range of 2% by mass to 6% by mass, and even still more

preferably in a range of 3% by mass to 6% by mass with respect to the total amount of the maintenance liquid.

Hereinafter, specific examples of the solvent MA are described together with the MA values and the boiling points.

However, the solvent MA is not limited to the following specific examples.

Specific examples thereof include 1-octanol (MA value of 3.7, boiling point of 188°C), 2-ethylhexanol (MA value of 3.7, boiling point of 184°C), 1-heptanol (MA value of 3.9, boiling point of 176°C), 1-hexanol (MA value of 4.2, boiling point of 157°C), 1-pentanol (MA value of 4.5, boiling point of 138°C), 2-methyl-2-butanol (MA value of 4.5, boiling point of 102°C), 2-ethyl-1,3-hexanediol (MA value of 4.9, boiling point of 244°C), 1,8-octanediol (MA value of 4.9, boiling point of 279°C), 1-butanol (MA value of 4.9, boiling point of 118°C), isobutyl alcohol (MA value of 4.9, boiling point of 108°C), sec-butyl alcohol (MA value of 4.9, boiling point of 99.5°C), tert-butyl alcohol (MA value of 4.9, boiling point of 82°C), 2,2,4-trimethyl-1,3-pentanediol (MA value of 4.9, boiling point of 232°C), 4-methylbenzyl alcohol (MA value of 3.8, boiling point of 217°C), 1,7-heptanediol (MA value of 5.2, boiling point of 259°C), 3-ethyl-3-oxetanemethanol (MA value of 5.4, boiling point of 250°C (at 700 mmHg), benzyl alcohol (MA value of 4.1, boiling point of 205°C), 1,6-hexanediol (MA value of 5.4, boiling point of 250°C), 3-methoxybutanol (MA value of 5.7, boiling point of 158°C), and 1,5-pentanediol (MA value of 5.7, boiling point of 242°C).

Further, specific examples of the solvent MA also include isomers of the specific examples described above.

As evident from Formula (MA), the MA value does not change between isomers.

For example, the MA value does not change between 1-octanol, 2-octanol, 3-octanol, and 4-octanol.

Further, examples of comparative solvents that do not satisfy an MA value of 5.8 or less include 1,4-butanediol (MA value of 6.1), ethylene glycol monobutyl ether (MA value of 6.3), and diethylene glycol monobutyl ether (MA value of 8.1).

(Solvent MB)

The maintenance liquid contains the solvent MB.

The solvent MB is at least one selected from the group consisting of glycerin, ethylene glycol, diethylene glycol, triethylene glycol, tetraethylene glycol, propylene glycol, dipropylene glycol, tripropylene glycol, and tetrapropylene glycol.

The solvent B is a hydrophilic organic solvent.

Since the maintenance liquid contains the solvent MB, the jetting stability after removal of the ink is improved.

The content of the solvent MB in the maintenance liquid (that is, Z% by mass in the present disclosure) is preferably in a range of 15% by mass to 80% by mass and more preferably in a range of 20% by mass to 70% by mass with respect to the total amount of the maintenance liquid.

In a case where the content of the solvent MB is 15% by mass or greater, the jetting stability after removal of the ink is further improved.

In a case where the content of the solvent MB is 80% by mass or less, the removability of the ink is further improved.

In the present invention, in a case where the content of the solvent MA with respect to the total amount of the maintenance liquid is defined as Y% by mass and the content of the solvent MB with respect to the total amount of the maintenance liquid is defined as Z% by mass, a total of Y and Z (that is, Y + Z) is preferably 15 or greater and 85 or less, more preferably 16 or greater and 83 or less, and still more preferably 20 or greater and 80 or less.

In a case where Y + Z is 15 or greater, the jetting stability after removal of the ink is further improved.

In a case where Y + Z is 85 or less, the ink removability is further improved.

In the present invention, the ratio of Y to a total of Y and Z (that is, Y/(Y + Z)) is preferably 0.02 or greater and 0.25 or less, more preferably 0.03 or greater and 0.21 or less, and still more preferably 0.05 or greater and 0.20 or less.

In a case where Y/(Y + Z) is 0.02 or greater, the ink removability is further improved.

In a case where Y/(Y + Z) is 0.25 or less, the jetting stability after removal of the ink is further improved.

Further, in a case where the ink contains resin particles and the total content of the resin particles and the resin dispersant with respect to the total solid content of the ink is defined as X% by mass, the content of the solvent MA with respect to the total amount of the maintenance liquid is defined as Y% by mass, and the content of the solvent MB with respect to the total amount of the maintenance liquid is defined as Z% by mass, the ratio of X to a total of Y and Z (that is, X/(Y + Z)) is preferably 0.5 or greater and 4.0 or less, more preferably 0.6 or greater and 3.5 or less, and still more preferably 0.7 or greater and less than 3.5.

In a case where X/(Y + Z) is 0.5 or greater, the rub resistance and the jetting stability after removal are further improved.

In a case where X/(Y + Z) is 4.0 or less, the jetting stability after removal is further improved.

(Other organic solvents)

The maintenance liquid may contain at least one of other organic solvents other than the solvent MA and the

solvent MB.

As other organic solvents, those that do not correspond to the solvent MA and the solvent MB can be appropriately selected from known water-soluble organic solvents (such as the organic solvents described in paragraphs 0039 to 0054 of WO2013/180074A) and used.

(Water)

The maintenance liquid contains water.

The content of water is preferably 10% by mass or greater, more preferably 15% by mass or greater, still more preferably 20% by mass or greater, and even still more preferably 50% by mass or greater with respect to the total amount of the maintenance liquid.

The upper limit of the content of water depends on the amount of other components, but is preferably 90% by mass or less and more preferably 80% by mass or less with respect to the total amount of the maintenance liquid.

(Surfactant)

The maintenance liquid contains at least one surfactant.

As the surfactant, a compound represented by Formula (1) is preferable.

The compound represented by Formula (1) permeates into the dried substance of the ink (for example, an ink film) and promotes the solubility of the dried substance. In this manner, the removability of the ink is further improved.

In a case where the maintenance liquid contains a compound represented by Formula (1) as a surfactant, the compound represented by Formula (1) to be contained may be used alone or two or more kinds thereof.

- Compound represented by Formula (1) -

$$R^1\text{-O-}(CH_2CH_2O)_m\text{-H} \qquad \text{Formula (1)}$$

In Formula (1), $R^1$ represents a linear or branched alkyl group having 6 to 20 carbon atoms, a linear or branched alkenyl group having 6 to 20 carbon atoms, or a substituted or unsubstituted aryl group. m represents an integer of 3 to 14.

The alkyl group represented by $R^1$ has 6 to 20 carbon atoms and may have any of a linear or branched structure. Examples of the alkyl group include an octyl group, a nonyl group, a decyl group, an undecyl group, a dodecyl group, a tridecyl group, a tetradecyl group, a cetyl (hexadecyl) group, a stearyl (octadecyl) group, a nonadecyl group, and an icosyl group. Among these, a linear or branched alkyl group having 8 to 10 carbon atoms is preferable, and a linear alkyl group having 8 to 10 carbon atoms is particularly preferable.

The alkenyl group represented by $R^1$ has 6 to 20 carbon atoms and may have any of a linear or branched structure. Examples of the alkenyl group include an octenyl group, a nonenyl group, a decenyl group, an undecenyl group, a dodecenyl group, a tridecenyl group, a tetradecenyl group, a hexadecenyl group, an oleyl (octadecenyl) group, a nonadecenyl group, and an icosenyl group. Among these, an alkenyl group having 8 to 10 carbon atoms is preferable.

As the substituted or unsubstituted aryl group represented by $R^1$, a substituted aryl group is preferable, an aryl group having 10 to 20 carbon atoms is more preferable, and an aryl group having 12 to 16 carbon atoms is still more preferable. In a case where the aryl group has a substituent, an alkyl group or an alkenyl group is preferable, an alkyl group is more preferable, and an alkyl group having 6 to 10 carbon atoms is particularly preferable as the substituent. Preferred examples of the aryl group include a nonylphenyl group and an octylphenyl group.

Further, m represents an integer of 3 to 14. From the viewpoint of suppressing aggregation in a case of mixing the ink, m represents preferably an integer of 4 to 8, more preferably an integer of 5 to 7, and particularly preferably an integer of 6 or 7. m can be optionally changed depending on the amount of epoxy to be charged, which is added to the alkyl group.

Preferred examples of the compound represented by Formula (1) include a compound in which $R^1$ represents a decyl group and m represents an integer of 6 or 7.

The HLB value of the compound represented by Formula (1) is preferably in a range of 10.5 to 13.8 and more preferably in a range of 11.5 to 12.9.

The "HLB value" in the present disclosure is a value calculated by the following equation.

$$\text{HLB} = 20 \times (\text{formula weight of polyethylene oxide group})/(\text{molecular weight})$$

Among examples of the compound represented by Formula (1), a compound in which $R^1$ represents a linear alkyl

group having 8 to 10 carbon atoms, m represents an integer of 4 to 8, and the HLB value is in a range of 11.5 to 13.4 is preferable, and a compound in which $R^1$ represents a linear alkyl group having 10 carbon atoms, m represents an integer of 5 to 7, and the HLB value is in a range of 11.5 to 12.9 is more preferable.

The content of the compound represented by Formula (1) in the maintenance liquid is preferably in a range of 0.1% by mass to 10% by mass and more preferably in a range of 0.5% by mass to 5% by mass with respect to the total amount of the maintenance liquid.

(Basic compound)

The maintenance liquid may contain at least one basic compound.

In a case where the maintenance liquid contains a basic compound, the maintenance liquid is allowed to have a buffering action for preventing a decrease in pH due to decomposition of the contained components or the like in a case where the maintenance liquid is aged due to storage or the like.

The basic compound is not particularly limited as long as the compound has a pH buffering capacity in a pH range of the maintenance liquid.

As the basic compound, a compound having a solubility of 5 mmol/L or greater in water is preferable.

From the viewpoint of effectively exhibiting the pH buffering capacity in the pH range of the maintenance liquid, a compound having a pKa value of 6.0 to 8.5 is preferable, and a compound having a pKa value of 6.8 to 8.3 is more preferable as the basic compound.

The basic compound may be any of an inorganic compound or an organic compound. From the viewpoints of easily obtaining a desired pKa value and having a satisfactory solubility in the maintenance liquid, a basic organic compound is preferable as the basic compound. Further, the basic compound may be a monobasic compound or a polybasic compound. Further, the pKa value of the basic organic compound is the pKa value of a conjugate acid.

Specific examples of the basic compound include the following compounds.

- Cacodylic acid (pKa: 6.2)
- 2,2-bis (hydroxymethyl)-2,2',2"-nitrilotriethanol (pKa: 6.5)
- Piperazine-N,N'-bis-(2-ethanesulfuric acid) (pKa: 6.8)
- Phosphoric acid (pKa2: 6.86)
- Imidazole (pKa: 7.0)
- N'-2-hydroxyethylpiperazin-N',2-ethanesulfuric acid (pKa: 7.6)
- N-methylmorpholine (pKa: 7.8)
- Triethanolamine (pKa: 7.8)
- Hydrazine (pKa: 8.11)
- Trishydroxymethylaminomethane (pKa: 8.3)

The content of the basic compound in the maintenance liquid is preferably in a range of 0.01% by mass to 10% by mass and more preferably in a range of 0.1% by mass to 5% by mass with respect to the total amount of the maintenance liquid.

(Antifoaming agent)

The maintenance liquid may contain at least one antifoaming agent.

Examples of the antifoaming agent include a silicone-based compound and a pluronic compound. Among these, it is more preferable that the maintenance liquid contains a silicone-based antifoaming agent. As the silicone-based antifoaming agent, an agent having a polysiloxane structure is preferable, and BYK-024 (manufactured by Big Chemie Japan Co., Ltd.) is particularly preferable.

(Other additives)

The maintenance liquid may contain other additives such as a fading inhibitor, an emulsion stabilizer, a penetration enhancer, an ultraviolet absorbing agent, a rust inhibitor, a preservative, a fungicide, a pH adjuster, a surface tension adjuster (such as a nonionic surfactant, a cationic surfactant, an anionic surfactant, or a betaine-based surfactant), a viscosity adjuster, and silicone-based compounds described in JP2011-63777A, in addition to the above-described components.

Further, the maintenance liquid may further contain a surfactant other than the compound represented by Formula (I) described above.

The pH of the maintenance liquid of the present disclosure is preferably in a range of 7.0 to 9.5, more preferably in

a range of 7.5 to 9.0, and particularly preferably in a range of 8.0 to 8.8.

The aggregation in a case of mixing the maintenance liquid with the ink can be further suppressed in a case where the pH of the maintenance liquid is 7.0 or greater, and deterioration of a liquid repellent film of the head can be further suppressed in a case where the pH thereof is 9.5 or less.

From the viewpoint of workability, the viscosity of the maintenance liquid at 25°C is preferably 1 mPa·s or greater and 50 mPa·s or less, more preferably 1 mPa·s or greater and less than 10 mPa·s, and still more preferably 2 mPa·s or greater and less than 5 mPa·s.

The viscosity is a value measured at 25°C using a VISCOMETER TV-22 (manufactured by TOKI SANGYO CO., LTD.).

It is preferable that the maintenance liquid does not substantially contain a pigment.

Here, the expression "the maintenance liquid does not substantially contain a pigment" indicates that the maintenance liquid does not contain a pigment, or in a case where the maintenance liquid contains a pigment, the content of the pigment is less than 1% by mass with respect to the total amount of the maintenance liquid.

Further, the solid content (25°C) in the maintenance liquid is not particularly limited, but is preferably 5% by mass or less and more preferably 2% by mass or less from the viewpoint of preventing solid matter from remaining after washing (that is, after removal of the ink from the nozzle surface).

<Pretreatment liquid>

The ink set of the ink set of the present invention may further comprise at least one pretreatment liquid.

The pretreatment liquid is a liquid for performing a pretreatment on a surface of the base material on a side where an image is recorded before image recording using the ink.

It is preferable that the pretreatment liquid contains an aggregating agent that allows the components in the ink to be aggregated.

It is preferable that the pretreatment liquid contains at least one selected from the group consisting of a polyvalent metal compound, an organic acid, a metal complex, and a water-soluble cationic polymer as the aggregating agent.

It is preferable that the aggregating agent contains an organic acid.

(Polyvalent metal compound)

Examples of the polyvalent metal compound include salts of alkaline earth metals of a group 2 (such as magnesium and calcium) in the periodic table, salts of transition metals of a group 3 (such as lanthanum) in the periodic table, salts of cations of a group 13 (such as aluminum) in the periodic table, and salts of lanthanides (such as neodymium).

As salts of these metals, salts of organic acids, a nitrate, a chloride, and a thiocyanate described below are suitable.

Among these, a calcium salt or magnesium salt of an organic acid (such as formic acid, acetic acid, or a benzoate), a calcium salt or magnesium salt of nitric acid, calcium chloride, magnesium chloride, and a calcium salt or magnesium salt of thiocyanic acid are preferable.

Further, it is preferable that at least a part of the polyvalent metal compound is dissociated into polyvalent metal ions and counter ions in the pretreatment liquid.

(Organic acid)

As the organic acid, an organic compound containing an acidic group is exemplified.

Examples of the acidic group include a phosphoric acid group, a phosphonic acid group, a phosphinic acid group, a sulfuric acid group, a sulfonic acid group, a sulfinic acid group, and a carboxy group.

From the viewpoint of the aggregation rate of the ink, a phosphoric acid group or a carboxy group is preferable, and a carboxy group is more preferable as the acidic group.

Further, it is preferable that at least a part of the acidic group is dissociated in the pretreatment liquid.

Preferred examples of the organic compound containing a carboxy group include polyacrylic acid, acetic acid, formic acid, benzoic acid, glycolic acid, malonic acid, malic acid (preferably DL-malic acid), maleic acid, succinic acid, glutaric acid, fumaric acid, citric acid, tartaric acid, phthalic acid, adipic acid, 4-methylphthalic acid, lactic acid, pyrrolidone carboxylic acid, pyrrone carboxylic acid, pyrrole carboxylic acid, furan carboxylic acid, pyridine carboxylic acid, coumarinic acid, thiophene carboxylic acid, and nicotinic acid. These compounds may be used alone or in combination of two or more kinds thereof.

From the viewpoint of the aggregation rate of the ink, as the organic compound containing a carboxy group, a di- or higher valent carboxylic acid (hereinafter, also referred to as polyvalent carboxylic acid) is preferable.

As the polyvalent carboxylic acid, malonic acid, malic acid, maleic acid, succinic acid, glutaric acid, adipic acid,

fumaric acid, tartaric acid, 4-methylphthalic acid, or citric acid is preferable, and malonic acid, malic acid, tartaric acid, glutaric acid, or citric acid is more preferable.

It is preferable that the organic acid has a low pKa (for example, 1.0 to 5.0).

In this manner, the surface charge of particles such as polymer particles or the pigment stably dispersed in the ink by a weakly acidic functional group such as a carboxy group is reduced by bringing the particles into contact with an organic acidic compound having a lower pKa to decrease the dispersion stability.

It is preferable that the organic acid has a low pKa and a high solubility in water and is di- or higher valent and more preferable that the organic acid is a di- or trivalent acidic substance which has a high buffering capacity in a pH region whose pKa is lower than the pKa of the functional group (for example, a carboxy group) that allows the particles to be stably dispersed in the ink.

(Metal complex)

As the metal complex, a metal complex including at least one selected from the group consisting of zirconium, aluminum, and titanium as a metal element is preferable.

As the metal complex, a metal complex including at least one selected from the group consisting of acetate, acetylacetonate, methylacetoacetate, ethylacetoacetate, octylene glycolate, butoxyacetylacetonate, lactate, lactate ammonium salt, and triethanol aminate as a ligand is preferable.

As the metal complex, various metal complexes are commercially available, and a commercially available metal complex may be used in the present disclosure. Further, various organic ligands, particularly various multidentate ligands that are capable of forming metal chelate catalysts are commercially available. Accordingly, a metal complex prepared by combining a commercially available organic ligand with a metal may be used.

(Water-soluble cationic polymer)

Examples of the water-soluble cationic polymer include polyallylamine, polyallylamine derivatives, poly-2-hydroxypropyldimethylammonium chloride, and poly(diallyldimethylammonium chloride).

The water-soluble cationic polymer can refer to the descriptions in known documents such as JP2011-042150A (particularly, paragraph 0156) and JP2007-98610A (particularly, paragraphs 0096 to 0108) as appropriate.

Examples of commercially available products of the water-soluble cationic polymer include SHALLOL (registered trademark) DC-303P and SHALLOL DC-902P (both manufactured by DKS Co., Ltd.), CATIOMASTER (registered trademark) PD-7and CATIOMASTER PD -30 (both manufactured by Yokkaichi Chemical Co., Ltd.) and UNISENCE FPA100L (manufactured by Senka Corporation).

The content of the aggregating agent is not particularly limited.

From the viewpoint of the aggregation rate of the ink, the content of the aggregating agent is preferably in a range of 0.1% by mass to 40% by mass, more preferably in a range of 0.1% by mass to 30% by mass, still more preferably in a range of 1% by mass to 20% by mass, and particularly preferably in a range of 1% by mass to 10% by mass with respect to the total amount of the pretreatment liquid.

(Water)

It is preferable that the pretreatment liquid contains water.

The content of water is preferably 50% by mass or greater and more preferably 60% by mass or greater with respect to the total amount of the pretreatment liquid.

The upper limit of the content of water depends on the amount of other components, but is preferably 90% by mass or less and more preferably 80% by mass or less with respect to the total amount of the pretreatment liquid.

(Resin particles)

The pretreatment liquid may contain resin particles. In a case where the pretreatment liquid contains resin particles, the adhesiveness of the image to the base material is further improved.

The glass transition temperature (Tg) of the resin particles contained in the pretreatment liquid is preferably in a range of 30°C to 120°C, more preferably in a range of 30°C to 80°C, still more preferably in a range of 40°C to 60°C, and even still more preferably in a range of 45 to 60°C.

The method of measuring the glass transition temperature of the resin particles is as described above.

Examples of the resin in the resin particles include a polyurethane resin, a polyamide resin, a polyurea resin, a polycarbonate resin, a polyolefin resin, a polystyrene resin, a polyester resin, and an acrylic resin. Among these, the resin particles contain preferably a polyester resin or an acrylic resin and more preferably a polyester resin.

Further, as the resin particles, acrylic resin particles, polyester resin particles, a mixture of acrylic resin particles and polyester resin particles, or composite particles containing an acrylic resin and a polyester resin are preferable.

The resin contained in the resin particles has preferably an alicyclic structure or an aromatic ring structure and more preferably an aromatic ring structure.

As the alicyclic structure, an alicyclic hydrocarbon structure having 5 to 10 carbon atoms is preferable, and a cyclohexane ring structure, a dicyclopentanyl ring structure, a dicyclopentenyl ring structure, or an adamantane ring structure is more preferable.

As the aromatic ring structure, a naphthalene ring or a benzene ring is preferable, and a benzene ring is more preferable.

The amount of the alicyclic structure or the aromatic ring structure is, for example, preferably in a range of 0.01 mol to 1.5 mol and more preferably in a range of 0.1 mol to 1 mol per 100 g of a specific resin.

From the viewpoint that the particles containing the specific resin are preferably set as water-dispersible resin particles described below, it is preferable that the resin contained in the resin particles contains an ionic group in the structure.

The ionic group may be an anionic group or a cationic group, but an anionic group is preferable from the viewpoint of ease of introduction.

The anionic group is not particularly limited, but a carboxy group or a sulfo group is preferable, and a sulfo group is more preferable.

The amount of the ionic group is not particularly limited, and the ionic group can be preferably used in a case where the amount thereof is set such that the particles containing the specific resin are water-dispersible resin particles. For example, the amount thereof is preferably in a range of 0.001 mol to 1.0 mol and more preferably in a range of 0.01 mol to 0.5 mol, per 100 g of the resin in the particles containing the specific resin.

The weight-average molecular weight (Mw) of the resin in the resin particles is preferably in a range of 1000 to 300000, more preferably in a range of 2000 to 200000, and still more preferably in a range of 5000 to 100000.

It is preferable that the resin particles are water-dispersible resin particles.

In the present disclosure, the water dispersibility indicates a property in which precipitation is not confirmed after a substance is stirred in water at 20°C and the solution is allowed to stand at 20°C for 60 minutes.

The volume average particle diameter of the resin particles is preferably in a range of 1 nm to 300 nm, more preferably in a range of 3 nm to 200 nm, and still more preferably in a range of 5 nm to 150 nm.

Further, as the resin particles, the same resin particles as those in the ink described above may be used.

In a case of preparing the pretreatment liquid, a commercially available product of an aqueous dispersion liquid of resin particles may be used.

Specific examples of the commercially available product of the aqueous dispersion liquid of resin particles include PESRESIN A124GP, PESRESIN A645GH, PESRESIN A615GE, and PESRESIN A520 (all manufactured by Takamatsu Oil & Fat Co., Ltd.), Eastek 1100 and Eastek 1200 (both manufactured by Eastman Chemical Company), PLASCOAT RZ570, PLASCOAT Z687, PLASCOAT Z565, PLASCOAT RZ570, and PLASCOAT Z690 (all manufactured by Goo Chemical Co., Ltd.), VYLONAL MD1200 (manufactured by Toyobo Co., Ltd.), and EM57DOC (manufactured by Daicel FineChem Ltd.).

The content of resin particles is not particularly limited.

The content of the resin particles is preferably in a range of 0.5% by mass to 30% by mass, more preferably in a range of 1% by mass to 20% by mass, and particularly preferably in a range of 1% by mass to 15% by mass with respect to the total amount of the pretreatment liquid.

(Water-soluble solvent)

It is preferable that the pretreatment liquid contains at least one water-soluble solvent.

As the water-soluble solvent, known solvents can be used without particular limitation.

Examples of the water-soluble solvent include polyhydric alcohol such as glycerin, 1,2,6-hexanetriol, trimethylolpropane, alkanediol (for example, ethylene glycol, propylene glycol (1,2-propanediol), 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, or 4-methyl-1,2-pentanediol), or polyalkylene glycol (for example, diethylene glycol, triethylene glycol, tetraethylene glycol, pentaethylene glycol, dipropylene glycol, or polyoxyethylene polyoxypropylene glycol); polyhydric alcohol ether such as polyalkylene glycol ether (for example, diethylene glycol monoalkyl ether, triethylene glycol monoalkyl ether, tripropylene glycol monoalkyl ether, or polyoxypropylene glyceryl ether); and saccharides, sugar alcohols, hyaluronic acids, alkyl alcohols having 1 to 4 carbon atoms, glycol ethers, 2-pyrrolidone, and N-methyl-2-pyrrolidone described in paragraph 0116 of JP2011-42150A.

Among these, from the viewpoint of suppressing transfer of components, polyhydric alcohol or polyhydric alcohol ether is preferable, and alkanediol, polyalkylene glycol, or polyalkylene glycol ether is more preferable.

(Surfactant)

The pretreatment liquid may contain at least one surfactant.
The surfactant can be used as a surface tension adjuster or an antifoaming agent. Examples of the surface tension adjuster or the antifoaming agent include a nonionic surfactant, a cationic surfactant, an anionic surfactant, and a betaine surfactant. Among these, from the viewpoint of the aggregation rate of the ink, a nonionic surfactant or an anionic surfactant is preferable.
Examples of the surfactant include compounds exemplified as surfactants in pp. 37 and 38 of JP1984-157636A (JP-S59-157636A) and Research Disclosure No. 308119 (1989). Further, other examples of the surfactant include fluorine-based (fluorinated alkyl-based) surfactants described in JP2003-322926A, JP2004-325707A, and JP2004-309806A and silicone-based surfactants.
For example, in a case where the pretreatment liquid contains a surfactant as an antifoaming agent, the content of the surfactant as an antifoaming agent is preferably in a range of 0.0001% by mass to 1% by mass and more preferably in a range of 0.001% by mass to 0.1% by mass with respect to the total amount of the pretreatment liquid.

(Other components)

The pretreatment liquid may contain other components in addition to the above-described components as necessary.
Examples of other components that may be contained in the pretreatment liquid include known additives such as a solid wetting agent, colloidal silica, an inorganic salt, a fading inhibitor, an emulsion stabilizer, a penetration enhancer, an ultraviolet absorbing agent, a preservative, a fungicide, a pH adjuster, a viscosity adjuster, a rust inhibitor, a chelating agent, and a water-soluble polymer compound other than a water-soluble cationic polymer (for example, water-soluble polymer compounds described in paragraphs 0026 to 0080 of JP2013-001854A).

(Physical properties of pretreatment liquid)

From the viewpoint of the aggregation rate of the ink, the pH of the pretreatment liquid at 25°C is preferably in a range of 0.1 to 3.5.
In a case where the pH of the pretreatment liquid is 0.1 or greater, the roughness of the base material is further decreased and the adhesiveness of the image area is further improved.
In a case where the pH of the pretreatment liquid is 3.5 or less, the aggregation rate is further improved, coalescence of dots (ink dots) caused by the ink on the surface of the base material is further suppressed, and the roughness of the image is further decreased.
The pH of the pretreatment liquid at 25°C is more preferably in a range of 0.2 to 2.0. The conditions for measuring the pH of the pretreatment liquid at 25°C are the same as the conditions for measuring the pH of the ink at 25°C described above.
In the case where the pretreatment liquid contains an aggregating agent, from the viewpoint of the aggregation rate of the ink, the viscosity of the pretreatment liquid is preferably in a range of 0.5 mPa·s to 10 mPa·s and more preferably in a range of 1 mPa·s to 5 mPa·s.
The conditions for measuring the viscosity of the pretreatment liquid here are the same as the conditions for measuring the viscosity of the ink described above.
The surface tension of the pretreatment liquid at 25°C is preferably 60 mN/m or less, more preferably in a range of 20 mN/m to 50 mN/m, and still more preferably in a range of 30 mN/m to 45 mN/m.
The conditions for measuring the surface tension of the pretreatment liquid here are the same as the conditions for measuring the surface tension of the ink described above.

[Image recording method]

An image recording method of the present invention is performed using the ink set of the present invention, and the method includes a step of applying the ink in the ink set of the present invention onto a base material to record an image by allowing the ink to be jetted from a nozzle surface of an ink jet head (hereinafter, also referred to as an "image recording step"), and a step of removing at least one of the ink or a dried substance of the ink attached to the ink jet head using the maintenance liquid in the ink set of the present invention (hereinafter, also referred to as a "removal step").
The image recording method of the present invention may include other steps as necessary.
Further, in the image recording step, the ink is not limited to being directly applied to the surface of the base material. The ink may be applied, for example, onto another image recorded on the base material or onto another liquid (for example, the pretreatment liquid) applied onto the base material.

The image recording method of the present invention is an image recording method using the ink of the present invention.

Therefore, the image recording method of the present invention is excellent in ink removability and also excellent in jetting stability after removal of the ink, despite using the ink having excellent drying properties.

<Base material>

The base material in the image recording method of the present invention is not particularly limited, and a known base material can be used.

Examples of the base material include a paper base material, a paper base material on which a resin (such as polyethylene, polypropylene, or polystyrene) is laminated, a resin base material, a metal plate (such as a plate made of a metal such as aluminum, zinc, or copper), a paper base material on which the above-described metal is laminated or vapor-deposited, and a resin base material on which the above-described metal is laminated or vapor-deposited.

As the base material, an impermeable base material is preferable.

The impermeable base material indicates a base material having a water absorption rate (% by mass, 24 hr.) of less than 0.2 according to ASTMD 570 of the ASTM test method.

The impermeable base material is not particularly limited, but a resin base material is preferable.

The resin base material is not particularly limited, and examples thereof include a thermoplastic resin base material.

Examples of the resin base material include a base material obtained by molding a thermoplastic resin in the form of a sheet or film.

As the resin base material, a base material containing polypropylene, polyethylene terephthalate, nylon, polyethylene, or polyimide is preferable.

The resin base material may be a transparent resin base material or a colored resin base material.

Here, the term "transparent" indicates that the transmittance of visible light having a wavelength of 400 nm to 700 nm is 80% or greater (preferably 90% or greater).

The shape of the resin base material is not particularly limited, but a sheet-shaped resin base material is preferable and a sheet-shaped resin base material which is capable of forming a roll by being wound is more preferable.

The thickness of the resin base material is preferably in a range of 10 μm to 200 μm and more preferably in a range of 10 μm to 100 μm.

The resin base material may be subjected to a surface treatment from the viewpoint of improving the surface energy.

Examples of the surface treatment include a corona treatment, a plasma treatment, a flame treatment, a heat treatment, an abrasion treatment, a light irradiation treatment (UV treatment), and a flame treatment, but the surface treatment is not limited thereto.

<Image recording step>

The image recording step is a step of applying the ink onto the base material to record an image by allowing the ink to be jetted from the ink jet head.

As the method of allowing the ink to be jetted from the ink jet head, for example, an electric charge control method of allowing an ink to be jetted using an electrostatic attraction force; a drop-on-demand method (pressure pulse method) using a vibration pressure of a piezoelectric element; an acoustic ink jet method of allowing an ink to be jetted using a radiation pressure by converting an electric signal into an acoustic beam and irradiating the ink with the acoustic beam; and a thermal ink jet (bubble jet (registered trademark)) method of heating an ink to form bubbles and utilizing the generated pressure can be used.

Further, as the method of allowing the ink to be jetted from the ink jet head, for example, a method described in JP1979-59936A (JP-S54-59936A), in which an ink is jetted from a nozzle using an action force caused by a rapid change in volume of the ink after being subjected to an action of thermal energy can also be used.

Further, as the method of allowing the ink to be jetted from the ink jet head, a method described in paragraphs 0093 to 0105 of JP2003-306623A can also be used.

Examples of the system of the ink jet head include a shuttle system of performing recording while scanning a short serial head in the width direction of the base material and a line system of using a line head in which recording elements are aligned in correspondence with the entire area of one side of the base material.

In the line system, image recording can be performed on the entire surface of the base material by scanning the base material in a direction intersecting the direction in which the recording elements are aligned. In the line system, a transport system such as a carriage that scans a short head in the shuttle system is not necessary. Further, in the line system, since the movement of a carriage and complicated scanning control between the head and the base material are

not necessary as compared with the shuttle system, only the base material moves. Therefore, according to the line system, image recording at a higher speed than that of the shuttle system can be realized.

It is preferable to apply the ink using an ink jet head having a resolution of 300 dpi or greater (more preferably 600 dpi and still more preferably 800 dpi). Here, dpi stands for dot per inch, and 1 inch is 2.54 cm.

From the viewpoint of obtaining a high-definition image, the liquid droplet amount of the ink to be jetted from the nozzle of the ink jet head is preferably in a range of 1 pico liter (pL) to 10 pL and more preferably in a range of 1.5 pL to 6 pL.

Further, from the viewpoints of improving the image unevenness and improving connection of continuous gradations, it is also effective that the ink is jetted by combining different liquid droplet amounts.

In the image recording step, an image may be obtained by heating and drying the ink which has been applied onto the base material.

Examples of the means for heating and drying the ink include known heating means such as a heater, known air blowing means such as a dryer, and means for combining these.

Examples of the method for heating and drying the ink include a method of applying heat using a heater or the like from a side of the base material opposite to the surface onto which the ink has been applied; a method of applying warm air or hot air to the surface of the base material onto which the ink has been applied; a method of applying heat using an infrared heater from the surface of the base material onto which the ink has been applied or from a side of the base material opposite to the surface onto which the ink has been applied; and a method of combining a plurality of these methods.

The heating temperature of heating and drying the ink is preferably 55°C or higher, more preferably 60°C or higher, and particularly preferably 65°C or higher. The upper limit of the heating temperature is not particularly limited, and the upper limit thereof may be 100°C and preferably 90°C.

The time of heating and drying the ink is not particularly limited, but is preferably in a range of 3 seconds to 60 seconds, more preferably in a range of 5 seconds to 60 seconds, and particularly preferably in a range of 10 seconds to 45 seconds.

Further, the base material may be heated in advance before the application of the ink.

The heating temperature may be appropriately set, but the temperature of the base material is set to be preferably in a range of 20°C to 50°C and more preferably in a range of 25°C to 40°C.

<Ink removal step>

The ink removal step is a step of removing the ink attached to the surface (that is, the nozzle surface of the ink jet head) of the ink jet head from which the ink is jetted.

Examples of the method of removing the ink from the nozzle surface of the ink jet head in the ink removal step include a method of removing the ink using a liquid, a method of removing the ink with cloth, paper, a wiper blade, or the like, and a method of combining these methods.

Examples of the liquid for removing the ink from the nozzle surface include a liquid containing water, and more specific examples thereof include water, a water-soluble organic solvent, and a mixed solution containing water and a water-soluble organic solvent.

Examples of the mixed solution containing water and a water-soluble organic solvent include a maintenance liquid for an ink jet head which contains water, a water-soluble organic solvent, and a surfactant (for example, a maintenance liquid for ink jet recording described in JP5819206B).

In a case where the ink is removed from the nozzle surface using a liquid, it is preferable that the liquid is applied to the nozzle surface.

The amount of liquid to be applied to the nozzle surface is, for example, in a range of 1 g/m$^2$ to 100 g/m$^2$.

The liquid can be applied to the nozzle surface by, for example, performing jetting according to an ink jet method, coating using a roller, or spraying.

Further, as the method of applying the liquid to the nozzle surface, for example, methods carried out using a water head difference described in JP2011-73295A and JP2011-73339A may be employed.

Preferred examples of the removal method for removing the ink from the nozzle surface include a method of rubbing (wiping) the nozzle surface with a wiper blade to scrape off the ink; a method of removing the ink by using a wind pressure, a hydraulic pressure, or the like; and a method of wiping the ink with cloth or paper.

These methods may be carried out by applying a liquid to the nozzle surface.

Among these, a method of wiping the ink with cloth or paper is preferable.

As the method of wiping the ink with cloth or paper, for example, a method of reducing the replacement frequency of a wiping member and making a device compact, described in JP2010-241127A, may be employed.

As the material of the wiper blade, elastic rubber is preferable.

Specific examples of the material include butyl rubber, chloroprene rubber, ethylene propylene rubber, silicone rubber, urethane rubber, and nitrile rubber. From the viewpoint of ink repellency of the wiper blade, a wiper blade coated with a fluororesin or the like may be used.

<Step of applying pretreatment liquid>

The image recording method of the present invention may include a step of applying a pretreatment liquid, which contains an aggregating agent allowing components in the ink to be aggregated, onto the base material (hereinafter, also referred to as a "pretreatment liquid application step") before the image recording step described above.

In this case, in the image recording step, an image is recorded by applying the ink onto at least a part of the surface of the base material onto which the pretreatment liquid has been applied.

The image recording method according to the embodiment including the pretreatment liquid application step may be carried out using an ink set according to the embodiment comprising a pretreatment liquid or may be carried out using a pretreatment liquid and an ink set according to the embodiment that does not comprise a pretreatment liquid.

In both cases, the preferred embodiment of the pretreatment liquid is as described in the section of the ink set above.

In a case where the image recording method of the present invention includes the pretreatment liquid application step, the aggregating agent allows the components (for example, the resin (B)) in the ink to be aggregated on the base material. In this manner, high-speed image recording is realized. Further, the rub resistance of the image is further improved.

The application of the pretreatment liquid onto the base material can be performed by applying a known method such as a coating method, an ink jet method, or an immersion method.

Examples of the coating method include known coating methods using a bar coater (such as a wire bar coater), an extrusion die coater, an air doctor coater, a blade coater, a rod coater, a knife coater, a squeeze coater, a reserve roll coater, a gravure coater, or a flexo coater.

The details of the ink jet method are the same as the details of the ink jet method which can be applied to the image recording step described above.

In the pretreatment liquid application step, the base material may be heated before the application of the pretreatment liquid.

The heating temperature is set such that the temperature of the base material is preferably in a range of 20°C to 50°C and more preferably in a range of 25°C to 40°C.

In the pretreatment liquid application step, the pretreatment liquid may be heated and dried after the application of the pretreatment liquid and before the image recording step described above.

Examples of the means for heating and drying the pretreatment liquid include known heating means such as a heater, known air blowing means such as a dryer, and means for combining these.

Examples of the method of heating and drying the pretreatment liquid include a method of applying heat using a heater or the like from a side of the base material opposite to the surface onto which the pretreatment liquid has been applied; a method of applying warm air or hot air to the surface of the base material onto which the pretreatment liquid has been applied; a method of applying heat using an infrared heater from the surface of the base material onto which the pretreatment liquid has been applied or from a side of the base material opposite to the surface onto which the pretreatment liquid has been applied; and a method of combining a plurality of these methods.

The heating temperature of heating and drying the pretreatment liquid is preferably 35°C or higher and more preferably 40°C or higher.

The upper limit of the heating temperature is not particularly limited, and the upper limit thereof is preferably 100°C, more preferably 90°C, and still more preferably 70°C.

The time of heating and drying the pretreatment liquid is not particularly limited, but is preferably in a range of 0.5 seconds to 60 seconds, more preferably in a range of 0.5 seconds to 20 seconds, and particularly preferably in a range of 0.5 seconds to 10 seconds.

Examples

Hereinafter, examples of the present invention will be described below, but the present invention is not limited to the following examples. Further, "parts" and "%" are on a mass basis unless otherwise specified.

[Example 1]

A maintenance liquid, an ink, and a pretreatment liquid were respectively prepared to prepare an ink set containing the maintenance liquid, the ink, and the pretreatment liquid.

Hereinafter, the details will be described.

<Preparation of maintenance liquid>

Components in the following composition were mixed to prepare a maintenance liquid having the following composition.

(Composition of maintenance liquid)

- · 1-Hexanol (hereinafter, also referred to as "1-HexOH") (solvent MA) ... 3% by mass
- · Diethylene glycol (hereinafter, also referred to as "DEG") (solvent MB) ... 40% by mass
- · Imidazole (pKa = 7.0, basic compound) ... 0.5% by mass
- · SNOWTEX XS (manufactured by Nissan Chemical Co., Ltd., colloidal silica) ... 0.2% by mass
- · PEG (6) monodecyl ether (the structure is shown below) ... 3.0% by mass
- · Ion exchange water ... remaining amount set such that the total amount of the composition was 100% by mass

$$C_{10}H_{21}\text{-}O\text{-}(CH_2CH_2O)_6\text{-}H$$

PEG (6) monodecyl ether

<Preparation of ink>

(Synthesis of resin dispersant D-1)

A resin dispersant D-1 was synthesized in the following manner.

88 g of methyl ethyl ketone was added to a 1000 mL three-neck flask provided with a stirrer and a cooling pipe and heated at 72°C in a nitrogen atmosphere, and a solution obtained by dissolving 0.85 g of dimethyl 2,2'-azobisisobutyrate, 60 g of benzyl methacrylate, 10 g of methacrylic acid, and 30 g of methyl methacrylate in 50 g of methyl ethyl ketone was added dropwise thereto for 3 hours. After completion of the dropwise addition, the solution was allowed to further react for 1 hour, a solution obtained by dissolving 0.42 g of dimethyl 2,2'-azobisisobutyrate in 2 g of methyl ethyl ketone was added thereto, and the solution was heated to 78°C and further heated for 4 hours. The obtained reaction solution was reprecipitated twice in a large excess amount of hexane, and the deposited resin was dried. In this manner, 96 g of the resin dispersant D-1 which was a benzyl methacrylate/methyl methacrylate/methacrylic acid copolymer (= 60/30/10 [mass ratio]) was obtained.

The composition of the obtained resin was confirmed by $^1$H-NMR, and the weight-average molecular weight (Mw) acquired by GPC in terms of polystyrene was 44600. Further, the acid value acquired by the method described in JIS standard (JISK0070:1992) was 65.2 mgKOH/g.

(Preparation of pigment dispersion liquid M)

C. I. Pigment Red 122 (manufactured by Dainichiseika Color & Chemicals Mfg. Co., Ltd.) (4 parts), the resin dispersant D-1 (3 parts) obtained in the above-described manner, methyl ethyl ketone (42 parts), a 1 N NaOH aqueous solution (5.5 parts), and ion exchange water (87.2 parts) were mixed and dispersed at 2500 rpm for 6 hours using 0.1 mmφ zirconia beads with a bead mill. The obtained dispersion liquid was concentrated under reduced pressure at 55°C until methyl ethyl ketone was sufficiently distilled off, a part of water was further removed, a centrifugal treatment (using a 50 mL centrifuge tube) was performed at 8000 rpm for 30 minutes using a high-speed centrifugal cooler 7550 (manufactured by Kubota Corporation) so that the precipitate was removed, thereby recovering the supernatant.

In the above-described manner, a pigment dispersion liquid M was obtained.

The absorbance spectrum of the pigment dispersion liquid M was measured and the pigment concentration was acquired from the spectrum, and the concentration was 10.2% by mass. Further, the average particle diameter of the pigment particles dispersed in the pigment dispersion liquid M was 130 nm.

(Preparation of resin particles P1)

A 2 L three-neck flask provided with a stirrer, a thermometer, a reflux cooling pipe, and a nitrogen gas introduction pipe was charged with 560.0 g of methyl ethyl ketone, and the solution was heated to 87°C. Next, a mixed solution formed of 220.4 g of methyl methacrylate, 301.6 g of isobornyl methacrylate, 58.0 g of methacrylic acid, 108 g of methyl ethyl ketone, and 2.32 g of "V-601" (polymerization initiator, manufactured by FUJIFILM Wako Pure Chemical Corporation,

dimethyl 2,2'-azobis(2-methyl propionate)) was added dropwise to the methyl ethyl ketone in the reaction container at a constant speed such that the dropwise addition was completed for 2 hours while the reflux state in the reaction container was maintained (hereinafter, the reflux state was maintained until the reaction was completed). After completion of the dropwise addition, the solution was stirred for 1 hour, and the operation of the following step (1) was performed on the solution after being stirred for 1 hour.

Step (1) ... A solution formed of 1.16 g of "V-601" and 6.4 g of methyl ethyl ketone was added to the solution, and the resulting solution was stirred for 2 hours.

Next, the operation of the step (1) was repeatedly performed four times, a solution formed of 1.16 g of "V-601" and 6.4 g of methyl ethyl ketone was added to the solution, and the resulting solution was stirred for 3 hours (the operation carried out so far is referred to as the "reaction").

After completion of the reaction, the temperature of the solution was decreased to 65°C, 163.0 g of isopropanol was added to the solution, and the solution was allowed to be naturally cooled, thereby obtaining a polymerization solution (concentration of solid contents: 41.0%) containing a copolymer of methyl methacrylate, isobornyl methacrylate, and methacrylic acid (= 38/52/10 [mass ratio]).

The weight-average molecular weight (Mw) of the copolymer was 63000, and the acid value thereof was 65.1 (mgKOH/g).

Next, 317.3 g (concentration of solid contents: 41.0% by mass) of the obtained polymerization solution was weighed, 46.4 g of isopropanol, 1.65 g of a 20% maleic acid anhydride aqueous solution (water-soluble acidic compound, corresponding to 0.3% by mass as maleic acid with respect to the copolymer), and 40.77 g of a 2 mol/L NaOH aqueous solution were added to the solution, and the temperature of the liquid in the reaction container was increased to 70°C.

Next, 380 g of distilled water was added dropwise to the solution, which had been heated to 70°C, at a speed of 10 ml/min, and water dispersion was performed (dispersion step).

Thereafter, a total amount of 287.0 g of isopropanol, methyl ethyl ketone, and distilled water was distilled off by maintaining the temperature of the liquid in the reaction container at 70°C for 1.5 hours under reduced pressure (solvent removal step). 0.278 g (440 ppm as benzisothiazolin-3-one to the solid content of the polymer) of PROXEL GXL (S) (manufactured by Arch Chemicals, Inc.) was added to the obtained liquid.

The obtained liquid was filtered using a filter having a mesh diameter of 1 μm, and the filtrate was collected, thereby obtaining an aqueous dispersion liquid of resin particles P1 whose concentration of solid contents was 26.5% by mass.

The glass transition temperature $T_g$ (°C) of the resin particles P1 was 120°C, and the volume average particle diameter thereof was 10 nm.

(Preparation of ink)

An ink (specifically, magenta ink) having the following composition was prepared using components other than the magenta pigment, the resin dispersant D-1, and the resin particles P1 in the following composition, the pigment dispersion liquid M, and an aqueous dispersion of the resin particles P1.

- Composition of ink -

· C. I. Pigment Red 122 (magenta pigment) ... 3.6% by mass
· Resin dispersant D-1 ... 2.5% by mass
· Resin particles P1 ... 5% by mass
· Propylene glycol (PG; boiling point of 188°C) (manufactured by FUJIFILM Wako Pure Chemical Corporation) ... 20% by mass
· Propylene glycol monomethyl ether (PM; boiling point of 121°C) (manufactured by FUJIFILM Wako Pure Chemical Corporation) ... 5% by mass
· OLFINE E1010 (manufactured by Nissin Chemical Co., Ltd., surfactant) ... 1% by mass
· SNOWTEX XS (manufactured by Nissan Chemical Co., Ltd., colloidal silica) ... 0.3% by mass (0.06% by mass in terms of solid content)
· Ion exchange water ... remaining amount set such that the total amount of the composition was 100% by mass

<Preparation of pretreatment liquid>

A pretreatment liquid having the following composition was prepared.

- Composition of pretreatment liquid -

· Aggregating agent (glutaric acid, manufactured by FUJIFILM Wako Pure Chemical Corporation; organic acid) ... 4% by mass
· Resin particles ("PESRESIN A615GE", manufactured by Takamatsu Oil & Fat Co., Ltd. (composite particles containing acrylic resin and polyester resin)) ... 8% by mass in terms of solid content of resin particles
· 1,2-Propanediol (manufactured by FUJIFILM Wako Pure Chemical Corporation) (water-soluble solvent) ... 10% by mass
· Antifoaming agent (TSA-739 (15% by mass), manufactured by Momentive Performance Materials Japan LLC, emulsion type silicone antifoaming agent) ... 0.01% by mass in terms of solid content of antifoaming agent
· OLFINE E1010 (manufactured by Nissin Chemical Co., Ltd.) (surfactant) ... 0.1% by mass
· Water ... remaining amount set such that total amount of composition was 100% by mass

<Evaluation>

The following evaluation was performed using the ink set formed of the maintenance liquid, the ink, and the pretreatment liquid described above. The results are listed in Table 1.

<Removability>

The removability (that is, the removability of the ink from the nozzle surface of the ink jet head) was evaluated in the following manner.

First, as a silicon plate imitating the nozzle surface of an ink jet head, a silicon plate obtained by cutting a silicon wafer (silicon wafer "4-P-1", manufactured by AS ONE Corporation) into a size of 5 $cm^2$ was prepared.

Next, 10 $\mu$L of the ink was added dropwise onto the silicon plate, the silicon plate onto which the ink had been added dropwise was stored in a constant temperature chamber at a temperature of 40°C for 1 hour and taken out from the constant temperature chamber after the storage.

Next, an operation of wiping the ink on the silicon plate (hereinafter, referred to as a "wiping operation") was repeatedly performed in a state of applying a load of 4 N thereto using cotton woven cloth (TEXWIPE TX304, manufactured by Texwipe) impregnated with 1 mL of a maintenance liquid.

While the wiping operation was repeatedly performed, the ink removal state on the silicon plate was visually observed, and the removability was evaluated based on the following evaluation standards.

In the following evaluation standards, the rank of the most excellent removability is "5".

- Evaluation standards for removability -

5: All the ink on the plate was removed during which the wiping operation was performed 3 times or less.
4: All the ink on the plate was removed during which the wiping operation was performed 4 times or more and 6 times or less.
3: All the ink on the plate was removed during which the wiping operation was performed 7 times or more and 9 times or less.
2: All the ink on the plate was removed during which the wiping operation was performed 10 times or more and 12 times or less.
1: The ink on the plate partly remained even after the wiping operation was performed 13 times or more.

<Rub resistance of image>

(Image recording)

Image recording was performed using the ink and the pretreatment liquid of the ink set described above.

An ink jet recording device comprising a transport system for continuously transporting a long base material, a wire bar coater for coating the base material with the pretreatment liquid, and an ink jet head for applying the ink to the surface of the base material onto which the pretreatment liquid had been applied was prepared.

Further, a polyethylene terephthalate (PET) base material ("FE2001", manufactured by Futamura Chemical Co.,

Ltd., (thickness of 25 μm, width of 500 mm, length of 2000 m), hereinafter, referred to as an "impermeable base material A") serving as an impermeable base material was prepared as the base material.

A solid image of magenta color was recorded in the following manner while the impermeable base material A was continuously transported at 635 mm/sec using the ink jet recording device.

The impermeable base material A was coated with the pretreatment liquid using a wire bar coater such that the amount of the pretreatment liquid to be applied reached approximately 1.7 g/m$^2$, and the pretreatment liquid was dried at 50°C for 2 seconds.

Next, the ink was applied to the surface of the impermeable base material A coated with the pretreatment liquid in the form of a solid image under the following application conditions, and the applied ink was dried at 80°C for 30 seconds, thereby recording a solid image of magenta color.

Both the method of drying the pretreatment liquid and the method of drying the ink were warm air drying.

- Ink application conditions -

Ink jet head: 1200 dpi/20 inch width piezo full line head (here, dpi is an abbreviation for dot per inch and 1 inch is 2.54 cm)

Amount of ink to be jetted from ink jet head: 4.0 pL
Driving frequency: 30 kHz (transport speed of base material: 635 mm/sec)

(Evaluation of rub resistance of image)

General paper "OK TOPCOAT MAT N" (basis weight of 127.9 g/m$^2$, manufactured by Oji Paper Co., Ltd.) was superimposed on the solid image recorded on the impermeable base material A, and the paper was reciprocatingly rubbed 10 times with a load of 200 g.

The solid image was visually observed every time one reciprocation was completed, and the rub resistance of the image was evaluated based on the following evaluation standards.

In the following evaluation standards, the rank of the most excellent rub resistance of the image is "5".

- Evaluation standards for rub resistance of image -

5: No scratches occurred on the image after reciprocating rubbing 10 times.
4: Although slight scratches were found on the image after reciprocating rubbing 10 times, but the appearance of the entire image was not affected.
3: Scratches occurred to the extent of affecting the appearance of the entire image due to reciprocating rubbing performed 8 times to 10 times.
2: Scratches occurred to the extent of affecting the appearance of the entire image due to reciprocating rubbing performed 5 times to 7 times.
1: Scratches occurred to the extent of affecting the appearance of the entire image due to reciprocating rubbing performed once to 4 times.

<Jetting stability after removal>

The following evaluations (i) to (iii) were performed using the image recording device used to evaluate the rub resistance of the image described above, and the jetting stability after removal (that is, the jetting stability after removal of the ink from the nozzle surface) was evaluated based on the pass or fail of these evaluations.

Evaluation (i): The ink was allowed to be continuously jetted from the ink jet head for 45 minutes. During the jetting, it was confirmed that the ink was jetted from all nozzles. Immediately after completion of the jetting, the maintenance liquid was applied to the nozzle surface of the ink jet head, and the ink was wiped (that is, the ink was removed, the same applies hereinafter) once. After the wiping, the ink was allowed to be jetted from the ink jet head again, and the number of jetting nozzles was counted.

Based on the total number of nozzles and the number of jetting nozzles after the wiping, the ink jetting rate after the wiping (that is, after removal of the ink) was acquired by the following equation.

Ink jetting rate after wiping (%) = (number of jetting nozzles after wiping)/(total number of nozzles) × 100

A case where the ink jetting rate after the wiping was 90% or greater was regarded as a pass.

Evaluation (ii): The ink was allowed to be continuously jetted from the ink jet head for 5 minutes. During the jetting, it was confirmed that the ink was jetted from all nozzles. After completion of the jetting, the jetting of the ink was suspended for 30 minutes. After the suspension, the maintenance liquid was applied to the nozzle surface of the ink jet head, and the ink was wiped once. After the wiping, the ink was allowed to be jetted from the ink jet head again, and the number of jetting nozzles was counted.

Based on the total number of nozzles and the number of jetting nozzles after the wiping, the ink jetting rate after the wiping was acquired by the above-described equation.

A case where the ink jetting rate after the wiping was 90% or greater was regarded as a pass.

Evaluation (iii): The ink was allowed to be continuously jetted from the ink jet head for 5 minutes. During the jetting, it was confirmed that the ink was jetted from all nozzles. Immediately after completion of the jetting, the maintenance liquid was applied to the nozzle surface of the ink jet head, and the ink was wiped once. After the wiping, the nozzle surface was allowed to stand for 45 minutes. After the standing for 45 minutes, the ink was allowed to be j etted from the ink jet head again, and the number of j etting nozzles was counted.

Based on the total number of nozzles and the number of jetting nozzles after the wiping, the ink jetting rate after the wiping was acquired by the above-described equation.

A case where the ink jetting rate after the wiping was 90% or greater was regarded as a pass.

Based on the results of the pass or fail of the following evaluations (i) to (iii), the jetting stability after removal was evaluated based on the following evaluation standards.

In the following evaluation standards, the rank of the most excellent jetting stability after removal is "5".

- Evaluation standards for jetting stability after removal -

5: The evaluation result of all three of the evaluations (i) to (iii) was a pass, and the ink jetting rate in all three evaluations was 95% or greater.
4: The evaluation result of all three of the evaluations (i) to (iii) was a pass (here, a case where the score was "5" was excluded).
3: The evaluation result of two of the evaluations (i) to (iii) was a pass.
2: The evaluation result of only one of the evaluations (i) to (iii) was a pass.
1: The evaluation result of all three of the evaluations (i) to (iii) was a fail.

<Latency>

A dot image was formed in the same manner as that for the magenta solid image in the evaluation of the rub resistance except that the ink was applied in the form of a dot image, using the image recording device used for the evaluation of the rub resistance of the image described above. The shape and the size of the obtained dot image were confirmed and set as the shape and the size of the initial dot.

Thereafter, the environment in the image recording device was maintained at a temperature of 25°C and a humidity of 30%, and image recording was suspended for 30 minutes.

After the suspension, image recording was resumed, dot images were recorded at intervals of 10 pixels in the transport direction of the base material, and the number of dots to return to the shape and the size of the initial dot was confirmed, and the latency was evaluated based on the following evaluation standards. Here, the size of one pixel is 21.2 μm.

In the evaluation standards, the rank of the most excellent latency is "5".

- Evaluation standards for latency -

5: There is no difference in shape and size between the initial dot and the first dot.
4: At the 2nd to 4th dots, the shape and the size of the dots were returned to those of the initial dot.
3: At the 5th to 10th dots, the shape and the size of the dots were returned to those of the initial dot.
2: At the 11th to 30th dots, the shape and the size of the dots were returned to those of the initial dot.
1: Even at the 31st dot, the shape and the size of the dots were not returned to those of the initial dot.

[Examples 2 to 17, 19 to 21, Reference Example 18, and Comparative Examples 1 to 5]

The same operation as in Example 1 was performed except that the combination of each component in the maintenance liquid and the ink was changed as listed in Table 1.
The results are listed in Table 1.

- Explanation of Table 1 -

· The amount of each component in the ink indicates the content (% by mass) of the component with respect to the total amount of the ink, and the amount of each component in the maintenance liquid indicates the content (% by mass) of the component with respect to the total amount of the maintenance liquid.
· "Other solid contents" in the ink indicate the magenta pigment, the surfactant, and colloidal silica (solid contents). In the examples in which the amount of other solid contents was changed, the total amount (that is, the amount of other solid contents) of the magenta pigment, the surfactant, and the colloidal silica (solid contents) was changed without changing the mass ratio between the magenta pigment, the surfactant, and the colloidal silica.
· "PG + PM" in the ink indicates a combination of propylene glycol (PG; boiling point of 188°C) (15% by mass) and propylene glycol monomethyl ether (PM; boiling point of 121°C) (5% by mass), and "PG + OM" indicates a combination of propylene glycol (PG; boiling point of 188°C) (15% by mass) and propylene glycol monoethyl ether (OM; boiling point of 133°C) (5% by mass).
· The resin dispersant D-2 is an example in which the benzyl acrylate was changed to the same mass of phenoxyethyl acrylate for the synthesis of the resin dispersant D-1.
· The resin particles P2 are resin particles synthesized in the following manner.

3.0 g of sodium dodecyl benzene sulfonate (62 mass% aqueous solution, manufactured by Tokyo Chemical Industry Co., Ltd.) and 376 g of water were added to a 1000 mL three-neck flask provided with a stirrer and a cooling pipe, and the solution was heated to 90°C in a nitrogen atmosphere. A solution A obtained by dissolving 11.0 g of a 50 mass% aqueous solution of sodium 2-acrylamido-2-methylpropane sulfonate (manufactured by Sigma-Aldrich Co., LLC) in 20 g of water, a solution B obtained by mixing 7.5 g of n-butyl methacrylate (manufactured by FUJIFILM Wako Pure Chemical Corporation), 27.5 g of 2-ethylhexyl methacrylate (manufactured by FUJIFILM Wako Pure Chemical Corporation), and 9.5 g of styrene (manufactured by FUJIFILM Wako Pure Chemical Corporation), and a solution C obtained by dissolving 6.0 g of sodium persulfate (manufactured by FUJIFILM Wako Pure Chemical Corporation) in 40 g of water were simultaneously added dropwise to the heated mixed solution in the three-neck flask for 3 hours. After the completion of the dropwise addition, the resulting solution was allowed to further react for 3 hours, thereby synthesizing 500 g of an aqueous dispersion liquid of the particles of the resin particles P2 (the solid content of the resin particles: 10.1% by mass).
The volume average particle diameter of the particles of the resin particles P2 in the aqueous dispersion liquid was 45 nm, and the glass transition temperature thereof was 20°C. Further, the weight-average molecular weight of the resin particles P2 was 32000.

· The abbreviations for organic solvent species are as follows.

1-HexOH: 1-hexanol (boiling point of 157°C)
1-PenOH: 1-pentanol (boiling point of 138°C)
1-BuOH: 1-butanol (boiling point of 118°C)
2-Ethyl-1,3-HexandiOH: 2-ethyl-1,3-hexanediol (boiling point of 244°C)
1,7-HepdiOH: 1,7-heptanediol (boiling point of 259°C)
BzOH: benzyl alcohol (boiling point of 205°C)
BuOMe: methyl butyl ether (boiling point of 70°C)
1,4-BudiOH: 1,4-butanediol (boiling point of 230°C)
S-BuOH: sec-butyl alcohol (boiling point of 99.5°C)
DEG: diethylene glycol (boiling point of 245°C)
DPG: dipropylene glycol (boiling point of 232°C)
DEGmBE: diethylene glycol monobutyl ether (boiling point of 230°C)
PG: propylene glycol (boiling point of 188°C)
PM: propylene glycol monomethyl ether (boiling point of 121°C)
OM: propylene glycol monoethyl ether (boiling point of 133°C)

[Table 1]

| | Maintenance liquid | | | | | | | Ink | | | | | | | | X | Y +Z | X/ (Y+Z) | Y/ (Y+Z) | Evaluation results | | | |
|---|---|---|---|---|---|---|---|---|---|---|---|---|---|---|---|---|---|---|---|---|---|---|---|
| | Solvent MA or comparative solvent | | | Solvent MB | | Other solvents | | Resin particles | | | Resin dispersant | | Amount of other solid contents | Solvent | | | | | | Removability | Jetting stability after removal | Rub resistance | Latency |
| | Type | Amount (Y) | MA value | Type | Amount (Z) | Type | Amount | Type | Tg (°C) | Amount | Type | Amount | | Type | Amount | | | | | | | | |
| Example 1 | 1-HexOH | 3.0 | 4.2 | DEG | 40 | - | - | P1 | 120 | 5 | D-1 | 2.5 | 4.6 | PG+PM | 20 | 62 | 43 | 1.4 | 0.07 | 5 | 5 | 5 | 5 |
| Example 2 | 1-HexOH | 3.0 | 4.2 | DPG | 40 | - | - | P1 | 120 | 5 | D-1 | 2.5 | 4.6 | PG+PM | 20 | 62 | 43 | 1.4 | 0.07 | 5 | 5 | 5 | 5 |
| Example 3 | 1-HexOH | 3.0 | 4.2 | DEG | 40 | DEG mBE | 5 | P1 | 120 | 5 | D-1 | 2.5 | 4.6 | PG+PM | 20 | 62 | 43 | 1.4 | 0.07 | 5 | 5 | 5 | 5 |
| Example 4 | 1-HexOH | 3.0 | 4.2 | DEG | 40 | DEG mBE | 5 | P1 | 120 | 5 | D-2 | 2.5 | 4.6 | PG+PM | 20 | 62 | 43 | 1.4 | 0.07 | 5 | 5 | 5 | 5 |
| Example 5 | 1-PenOH | 3.0 | 4.5 | DEG | 40 | - | - | P1 | 120 | 5 | D-1 | 2.5 | 4.6 | PG+PM | 20 | 62 | 43 | 1.4 | 0.07 | 5 | 5 | 5 | 5 |
| Example 6 | 1-HexOH | 3.0 | 4.2 | DEG | 40 | - | - | P1 | 120 | 1 | D-1 | 2.5 | 4.6 | PG+OM | 20 | 43 | 43 | 1.0 | 0.07 | 5 | 5 | 3 | 5 |
| Example 7 | 1-HexOH | 3.0 | 4.2 | DEG | 40 | - | - | P1 | 120 | 7 | D-1 | 1.8 | 2.1 | PG+OM | 20 | 80 | 43 | 1.9 | 0.07 | 4 | 5 | 5 | 3 |
| Example 8 | 1-HexOH | 4.0 | 4.2 | DEG | 70 | - | - | P1 | 120 | 5 | D-1 | 2.0 | 5.0 | PG+OM | 20 | 58 | 74 | 0.8 | 0.05 | 5 | 5 | 5 | 5 |
| Example 9 | 1-HexOH | 3.0 | 4.2 | DEG | 80 | - | - | P1 | 120 | 5 | D-1 | 2.0 | 5.0 | PG+OM | 20 | 58 | 83 | 0.7 | 0.04 | 3 | 5 | 5 | 5 |
| Example 10 | 1-HexOH | 0.5 | 4.2 | DEG | 15 | - | - | P1 | 120 | 5 | D-1 | 2.5 | 4.6 | PG+PM | 20 | 62 | 16 | 4.0 | 0.03 | 3 | 3 | 5 | 5 |
| Example 11 | 1-HexOH | 3.0 | 4.2 | DEG | 80 | - | - | P1 | 120 | 1 | D-1 | 2.5 | 4.6 | PG+PM | 20 | 43 | 83 | 0.5 | 0.04 | 3 | 3 | 3 | 5 |
| Example 12 | 1-HexOH | 5.0 | 4.2 | DEG | 20 | - | - | P1 | 120 | 5 | D-1 | 3.0 | 4.0 | PG+OM | 20 | 67 | 25 | 2.7 | 0.20 | 5 | 5 | 5 | 5 |
| Example 13 | 1-HexOH | 4.0 | 4.2 | DEG | 15 | - | - | P1 | 120 | 5 | D-1 | 3.0 | 4.0 | PG+OM | 20 | 67 | 19 | 3.5 | 0.21 | 5 | 4 | 5 | 5 |
| Example 14 | 1-HexOH | 3.0 | 4.2 | DEG | 40 | - | - | P1 | 120 | 5 | D-1 | 2.5 | 4.6 | PG+OM | 20 | 62 | 43 | 1.4 | 0.07 | 5 | 5 | 5 | 5 |
| Example 15 | 1-BuOH | 3.0 | 4.9 | DEG | 40 | - | - | P1 | 120 | 5 | D-1 | 4.0 | 3.0 | PG+OM | 20 | 75 | 43 | 1.7 | 0.07 | 4 | 5 | 5 | 5 |
| Example 16 | 1-BuOH | 8.0 | 4.9 | DEG | 40 | - | - | P1 | 120 | 5 | D-1 | 4.0 | 3.0 | PG+OM | 20 | 75 | 48 | 1.6 | 0.17 | 5 | 4 | 5 | 5 |
| Example 17 | 2-Ethyl-1,3-HexandiOH | 3.0 | 4.9 | DEG | 40 | - | - | P1 | 120 | 5 | D-1 | 2.5 | 4.6 | PG+PM | 20 | 62 | 43 | 1.4 | 0.07 | 4 | 4 | 5 | 5 |
| Reference Example 18 | 1,7-HepdiOH | 3.0 | 5.2 | DEG | 40 | - | - | P1 | 120 | 5 | D-1 | 2.5 | 4.6 | PG+OM | 20 | 62 | 43 | 1.4 | 0.07 | 3 | 5 | 5 | 5 |
| Example 19 | BzOH | 3.0 | 4.1 | DEG | 40 | - | - | P1 | 120 | 5 | D-1 | 2.5 | 4.6 | PG+OM | 20 | 62 | 43 | 1.4 | 0.07 | 5 | 5 | 5 | 5 |
| Example 20 | BuOMe | 3.0 | 4.5 | DEG | 40 | - | - | P1 | 120 | 5 | D-1 | 5.0 | 2.0 | PG+OM | 20 | 83 | 43 | 1.9 | 0.07 | 4 | 5 | 5 | 5 |
| Example 21 | 1-HexOH | 3.0 | 4.2 | DEG | 40 | - | - | P2 | 20 | 5 | D-1 | 2.5 | 4.6 | PG+OM | 20 | 62 | 43 | 1.4 | 0.07 | 5 | 5 | 3 | 3 |
| Comparative Example 1 | - | 0.0 | - | DEG | 40 | - | - | P1 | 120 | 5 | D-1 | 2.5 | 4.6 | PG+PM | 20 | 62 | 40 | 1.6 | 0.00 | 1 | 5 | 5 | 5 |
| Comparative Example 2 | 1,4-BudiOH | 3.0 | 6.1 | DEG | 40 | - | | P1 | 120 | 5 | D-1 | 2.5 | 4.6 | PG+PM | 20 | 62 | 43 | 1.4 | 0.07 | 2 | 5 | 5 | 5 |
| Comparative Example 3 | 1-HexOH | 0.2 | 4.2 | DEG | 40 | - | - | P1 | 120 | 5 | D-1 | 2.5 | 4.6 | PG+PM | 20 | 62 | 40 | 1.5 | 0.00 | 2 | 5 | 5 | 5 |
| Comparative Example 4 | 1-HexOH | 3.0 | 4.2 | - | 0 | - | - | P1 | 120 | 5 | D-1 | 2.5 | 4.6 | PG+PM | 20 | 62 | 3 | 20.7 | 1.00 | 4 | 1 | 5 | 5 |
| Comparative Example 5 | S-BuOH | 11.0 | 4.9 | DEG | 40 | - | - | P1 | 120 | 5 | D-1 | 2.5 | 4.6 | PG+PM | 20 | 62 | 51 | 1.2 | 0.22 | 5 | 2 | 5 | 5 |

As listed in Table 1, in each example in which the ink set comprising the ink which contained a pigment, a resin dispersant, and water and in which the content of the organic solvent having a boiling point of higher than 210°C was less than 1% by mass, and the maintenance liquid which contained the solvent MA, the solvent MB, and water, in which the solvent MA was an organic solvent having an MA value of 5.0 or less, the solvent MB was at least one selected from the group consisting of glycerin, ethylene glycol, diethylene glycol, triethylene glycol, tetraethylene glycol, propylene glycol, dipropylene glycol, tripropylene glycol, and tetrapropylene glycol, and the content of the solvent MA was in a range of 0.5% by mass to 10% by mass with respect to the total amount of the maintenance liquid was used, the removability of the ink from the nozzle surface and the jetting stability after removal were excellent. Further, in each example, the rub resistance of the image and the latency were also excellent.

In Comparative Example 1 in which the maintenance liquid did not contain the solvent MA, the ink removability was degraded as compared to each example.

In Comparative Example 2 in which the maintenance liquid contained a comparative solvent (1,4-BudiOH) having an MA value of greater than 5.8 in place of the solvent MA, the ink removability was degraded.

In Comparative Example 3 in which the content of the solvent MA was less than 0.5% by mass with respect to the total amount of the maintenance liquid, the removability of the ink was degraded.

In Comparative Example 4 in which the maintenance liquid did not contain the solvent MB, the jetting stability after removal was degraded.

In Comparative Example 5 in which the content of the solvent MA was greater than 10% by mass with respect to the total amount of the maintenance liquid, the jetting stability after removal was degraded.

As shown in the results of Examples 5 and 6, it was found that in a case where X (that is, X in a case where the total content of the resin particles and the resin dispersant was defined as X% by mass with respect to the total solid content of the ink) was 50 or greater (Example 5), the rub resistance was further improved.

As shown in the results of Examples 1 and 7, it was found that in a case where X was less than 80 (Example 1), the ink removability was further improved.

As shown in the results of Examples 8 and 9, it was found that in a case where Y/(Y + Z) was 0.05 or greater (Example 8), the removability was further improved.

As shown in the results of Examples 12 and 13, it was found that in a case where Y/(Y + Z) was 0.20 or less (Example 12), the jetting stability after removal was further improved.

As shown in the results of Examples 9 and 11, it was found that in a case where X/(Y + Z) was 0.7 or greater (Example 9), the jetting stability after removal and the rub resistance were further improved.

As shown in the results of Examples 12 and 13, it was found that in a case where X/(Y + Z) was less than 3.5 (Example 12), the jetting stability after removal was further improved.

## Claims

1. An ink set comprising:

   an inkjet ink which contains a pigment, a resin dispersant, and water and in which a content of an organic solvent having a boiling point of higher than 210°C is less than 1% by mass; and
   a maintenance liquid which contains a solvent MA, a solvent MB, and water,
   wherein the solvent MA is an organic solvent which is formed of a hydrophilic portion that is at least one selected from the group consisting of -OH, $-OCH_2CH_2OH$, $-OCH_2CHCH_3OH$, $-OCH_2CH_2-$, $-OCH_2CHCH_3-$, -COOH, -OC(=O)-, -OC(=O)O-, - NHC(=O)O-, -NHC(=O)NH-, -O-, $-NH_2$, -NH-, -CN, and $-NO_2$ and a hydrophobic portion that is a portion other than the hydrophilic portion and in which an MA value represented by Formula (MA) is 5.8 or less,
   the solvent MB is at least one selected from the group consisting of glycerin, ethylene glycol, diethylene glycol, triethylene glycol, tetraethylene glycol, propylene glycol, dipropylene glycol, tripropylene glycol, and tetrapropylene glycol, and
   a content of the solvent MA is in a range of 0.5% by mass to 10% by mass with respect to a total amount of the maintenance liquid,

   $$\text{MA value} = 7 + 4.02 \times \log(\text{molecular weight W}/\text{molecular weight O}) \quad \ldots \text{ Formula (MA)}$$

   in Formula (MA), the molecular weight W represents a molecular weight of the hydrophilic portion, and the molecular weight O represents a molecular weight of the hydrophobic portion,

   wherein the solvent MA includes an organic solvent formed of the hydrophilic portion and the hydrophobic portion and having an MA value of 5.0 or less, and
   a content of the organic solvent having an MA value of 5.0 or less is in a range of 0.5% by mass to 10% by mass with respect to the total amount of the maintenance liquid.

2. The ink set according to claim 1,

   wherein in a case where the content of the solvent MA with respect to the total amount of the maintenance liquid is defined as Y% by mass and
   a content of the solvent MB with respect to the total amount of the maintenance liquid is defined as Z% by mass, a total of Y and Z is 20 or greater and 80 or less.

3. The ink set according to claim 1 or 2,

   wherein in a case where the content of the solvent MA with respect to the total amount of the maintenance liquid is set as Y% by mass and
   a content of the solvent MB with respect to the total amount of the maintenance liquid is defined as Z% by mass, a ratio of Y to a total of Y and Z is 0.05 or greater and 0.20 or less.

4. The ink set according to any one of claims 1 to 3,
   wherein the inkjet ink further contains resin particles.

5. The ink set according to claim 4,
   wherein in a case where a total content of the resin particles and the resin dispersant with respect to a total solid content of the inkjet ink is defined as X% by mass, X is 40 or greater and 85 or less.

6. The ink set according to claim 4 or 5,

   wherein in a case where a total content of the resin particles and the resin dispersant with respect to a total solid content of the inkjet ink is defined as X% by mass,
   the content of the solvent MA with respect to the total amount of the maintenance liquid is set as Y% by mass, and
   a content of the solvent MB with respect to the total amount of the maintenance liquid is defined as Z% by mass, a ratio of X to a total of Y and Z is 0.7 or greater and less than 3.5.

**7.** The ink set according to any one of claims 1 to 6,
wherein the hydrophobic portion is a hydrocarbon group.

**8.** The ink set according to any one of claims 1 to 7,
wherein the organic solvent having an MA value of 5.8 or less is at least one selected from the group consisting of a monoalcohol compound and a dialcohol compound.

**9.** The ink set according to any one of claims 1 to 8,
wherein the organic solvent having an MA value of 5.8 or less includes at least one selected from the group consisting of octanol, 2-ethylhexanol, heptanol, hexanol, pentanol, butanol, 2-methyl-2-butanol, 2-ethyl-1,3-hexanediol, 1,8-octanediol, 2,2,4-trimethyl-1,3-pentanediol, 4-methylbenzyl alcohol, 1,7-heptanediol, 3-ethyl-3-oxetanemethanol, benzyl alcohol, 1,6-hexanediol, 3-methoxybutanol, and 1,5-pentanediol.

**10.** The ink set according to any one of claims 1 to 9,

wherein the solvent MA includes an organic solvent formed of the hydrophilic portion and the hydrophobic portion and having an MA value of 4.8 or less, and
a content of the organic solvent having an MA value of 4.8 or less is in a range of 0.5% by mass to 10% by mass with respect to the total amount of the maintenance liquid.

**11.** The ink set according to any one of claims 1 to 10,

wherein the solvent MA includes an organic solvent formed of the hydrophilic portion and the hydrophobic portion and having an MA value of 5.8 or less and a boiling point of 100°C or higher, and
a content of the organic solvent having a boiling point of 100°C or higher is in a range of 0.5% by mass to 10% by mass with respect to the total amount of the maintenance liquid.

**12.** An image recording method using the ink set according to any one of claims 1 to 11, the method comprising:

a step of applying the inkjet ink onto a base material to record an image by allowing the inkjet ink to be jetted from an ink jet head; and
a step of removing at least one of the inkjet ink or a dried substance of the inkjet ink attached to a surface of the ink jet head from which the inkjet ink has been jetted, using the maintenance liquid.

**Patentansprüche**

**1.** Tintensatz, umfassend:

eine Tintenstrahltinte, die ein Pigment, ein Harzdispergiermittel und Wasser enthält und bei der ein Gehalt eines organischen Lösungsmittels mit einem Siedepunkt von höher als 210 °C weniger als 1 Massen-% beträgt; und
eine Wartungsflüssigkeit, die ein Lösungsmittel MA, ein Lösungsmittel MB und Wasser enthält,
wobei das Lösungsmittel MA ein organisches Lösungsmittel ist, das aus einem hydrophilen Teil, der mindestens einer ist, der aus der Gruppe bestehend aus -OH, - $OCH_2CH_2OH$, $-OCH_2CHCH_3OH$, $-OCH_2CH_2-$, $-OCH_2CHCH_3-$, -COOH, -OC(=O)-, - OC(=O)O-, -NHC(=O)O-, -NHC(=O)NH-, -O-, $-NH_2$, -NH-, -CN und $-NO_2$ ausgewählt wird, und einem hydrophoben Teil, der ein anderer Teil als der hydrophile Teil ist, gebildet ist und bei dem ein MA-Wert, der durch Formel (MA) dargestellt wird, 5,8 oder weniger beträgt,
das Lösungsmittel MB mindestens eines ist, das aus der Gruppe bestehend aus Glycerin, Ethylenglykol, Diethylenglykol, Triethylenglykol, Tetraethylenglykol, Propylenglykol, Dipropylenglykol, Tripropylenglykol und Tetrapropylenglykol ausgewählt wird, und
ein Gehalt des Lösungsmittels MA in einem Bereich von 0,5 Massen-% bis 10 Massen-% in Bezug auf eine Gesamtmenge der Wartungsflüssigkeit liegt,

$$\text{MA-Wert} = 7 + 4{,}02 \times \log(\text{Molekulargewicht W}/\text{Molekulargewicht O}) \ldots \text{Formel (MA)}$$

in Formel (MA) das Molekulargewicht W ein Molekulargewicht des hydrophilen Teils darstellt und das Molekulargewicht O ein Molekulargewicht des hydrophoben Teils darstellt,
wobei das Lösungsmittel MA ein organisches Lösungsmittel, das aus dem hydrophilen Teil und dem hydropho-

ben Teil gebildet ist und einen MA-Wert von 5,0 oder weniger aufweist, enthält, und
ein Gehalt des organischen Lösungsmittels mit einem MA-Wert von 5,0 oder weniger in einem Bereich von 0,5 Massen-% bis 10 Massen-% in Bezug auf die Gesamtmenge der Wartungsflüssigkeit liegt.

**2.** Tintensatz nach Anspruch 1,

wobei in einem Fall, in dem der Gehalt des Lösungsmittels MA in Bezug auf die Gesamtmenge der Wartungsflüssigkeit als Y Massen-% definiert ist, und
ein Gehalt des Lösungsmittels MB in Bezug auf die Gesamtmenge der Wartungsflüssigkeit als Z Massen-% definiert ist,
eine Summe von Y und Z 20 oder mehr und 80 oder weniger beträgt.

**3.** Tintensatz nach Anspruch 1 oder 2,

wobei in einem Fall, in dem der Gehalt des Lösungsmittels MA in Bezug auf die Gesamtmenge der Wartungsflüssigkeit als Y Massen-% definiert ist, und
ein Gehalt des Lösungsmittels MB in Bezug auf die Gesamtmenge der Wartungsflüssigkeit als Z Massen-% definiert ist,
ein Verhältnis von Y zu einer Summe von Y und Z 0,05 oder mehr und 0,20 oder weniger beträgt.

**4.** Tintensatz nach einem der Ansprüche 1 bis 3,
wobei die Tintenstrahltinte ferner Harzpartikel enthält.

**5.** Tintensatz nach Anspruch 4,
wobei in einem Fall, in dem ein Gesamtgehalt der Harzpartikel und des Harzdispergiermittels in Bezug auf einen Gesamtfeststoffgehalt der Tintenstrahltinte als X Massen-% definiert ist, X 40 oder mehr und 85 oder weniger beträgt.

**6.** Tintensatz nach Anspruch 4 oder 5,

wobei in einem Fall, in dem ein Gesamtgehalt der Harzpartikel und des Harzdispergiermittels in Bezug auf einen Gesamtfeststoffgehalt der Tintenstrahltinte als X Massen-% definiert ist,
der Gehalt des Lösungsmittels MA in Bezug auf die Gesamtmenge der Wartungsflüssigkeit als Y Massen-% definiert ist, und
ein Gehalt des Lösungsmittels MB in Bezug auf die Gesamtmenge der Wartungsflüssigkeit als Z Massen-% definiert ist,
ein Verhältnis von X zu einer Summe von Y und Z 0,7 oder mehr und weniger als 3,5 beträgt.

**7.** Tintensatz nach einem der Ansprüche 1 bis 6,
wobei der hydrophobe Teil eine Kohlenwasserstoffgruppe ist.

**8.** Tintensatz nach einem der Ansprüche 1 bis 7,
wobei das organische Lösungsmittel mit einem MA-Wert von 5,8 oder weniger mindestens eines ist, das aus der Gruppe bestehend aus einer Monoalkoholverbindung und einer Dialkoholverbindung ausgewählt wird.

**9.** Tintensatz nach einem der Ansprüche 1 bis 8,
wobei das organische Lösungsmittel mit einem MA-Wert von 5,8 oder weniger mindestens eines enthält, das aus der Gruppe bestehend aus Octanol, 2-Ethylhexanol, Heptanol, Hexanol, Pentanol, Butanol, 2-Methyl-2-butanol, 2-Ethyl-1,3-hexandiol, 1,8-Octandiol, 2,2,4-Trimethyl-1,3-pentandiol, 4-Methylbenzylalkohol, 1,7-Heptandiol, 3-Ethyl-3-oxetanmethanol, Benzylalkohol, 1,6-Hexandiol, 3-Methoxybutanol und 1,5-Pentandiol ausgewählt wird.

**10.** Tintensatz nach einem der Ansprüche 1 bis 9,

wobei das Lösungsmittel MA ein organisches Lösungsmittel, das aus dem hydrophilen Teil und dem hydrophoben Teil gebildet ist und einen MA-Wert von 4,8 oder weniger aufweist, enthält, und
ein Gehalt des organischen Lösungsmittels mit einem MA-Wert von 4,8 oder weniger in einem Bereich von 0,5 Massen-% bis 10 Massen-% in Bezug auf die Gesamtmenge der Wartungsflüssigkeit liegt.

**11.** Tintensatz nach einem der Ansprüche 1 bis 10,

wobei das Lösungsmittel MA ein organisches Lösungsmittel, das aus dem hydrophilen Teil und dem hydrophoben Teil gebildet ist und einen MA-Wert von 5,8 oder weniger und einen Siedepunkt von 100 °C oder höher aufweist, enthält, und
ein Gehalt des organischen Lösungsmittels mit einem Siedepunkt von 100 °C oder höher in einem Bereich von 0,5 Massen-% bis 10 Massen-% in Bezug auf die Gesamtmenge der Wartungsflüssigkeit liegt.

**12.** Bildaufzeichnungsverfahren unter Verwendung des Tintensatzes nach einem der Ansprüche 1 bis 11, wobei das Verfahren umfasst:

einen Schritt des Aufbringens der Tintenstrahltinte auf ein Basismaterial, um ein Bild aufzuzeichnen, indem es der Tintenstrahltinte ermöglicht wird, aus einem Tintenstrahlkopf ausgestoßen zu werden; und
einen Schritt des Entfernens von mindestens einer von der Tintenstrahltinte und einer getrockneten Substanz der Tintenstrahltinte, die an einer Oberfläche des Tintenstrahlkopfes, aus dem die Tintenstrahltinte ausgestoßen worden ist, haftet, unter Verwendung der Wartungsflüssigkeit.

## Revendications

**1.** Ensemble d'encres comprenant :

une encre à jet d'encre qui contient un pigment, un dispersant de résine et de l'eau, et dans laquelle une teneur en solvant organique ayant un point d'ébullition supérieur à 210 °C est inférieure à 1 % en masse ; et
un liquide de maintenance qui contient un solvant MA, un solvant MB et de l'eau, dans lequel le solvant MA est un solvant organique qui est constitué d'une partie hydrophile qui est au moins l'une choisie dans le groupe constitué de -OH, - $OCH_2CH_2OH$, $-OCH_2CHCH_3OH$, $-OCH_2CH_2-$, $-OCH_2CHCH_3-$, -COOH, -OC(=O)-, - OC(=O)O-, -NHC(=O)O-, -NHC(=O)NH-, -O-, $-NH_2$, -NH-, -CN et $-NO_2$, et d'une partie hydrophobe qui est une partie autre que la partie hydrophile, et dans lequel une valeur MA représentée par Formule (MA) est de 5,8 ou moins,
le solvant MB est au moins l'un choisi dans le groupe constitué de glycérine, d'éthylène glycol, de diéthylène glycol, de triéthylène glycol, de tétraéthylène glycol, de propylène glycol, de dipropylène glycol, de tripropylène glycol et de tétrapropylène glycol, et
une teneur en solvant MA est dans une plage de 0,5 % en masse à 10 % en masse par rapport à une quantité totale du liquide de maintenance,

$$\text{valeur MA} = 7 + 4{,}02 \times \log(\text{poids moléculaire W}/\text{poids moléculaire O}) \ldots \text{Formule (MA)}$$

dans Formule (MA), le poids moléculaire W représente un poids moléculaire de la partie hydrophile, et le poids moléculaire O représente un poids moléculaire de la partie hydrophobe,
dans lequel le solvant MA inclut un solvant organique constitué de la partie hydrophile et de la partie hydrophobe et ayant une valeur MA de 5,0 ou moins, et
une teneur en solvant organique ayant une valeur MA de 5,0 ou moins est dans une plage de 0,5 % en masse à 10 % en masse par rapport à la quantité totale du liquide de maintenance.

**2.** Ensemble d'encres selon la revendication 1,

dans lequel, dans un cas où la teneur en solvant MA par rapport à la quantité totale du liquide de maintenance est définie comme Y % en masse et
une teneur en solvant MB par rapport à la quantité totale du liquide de maintenance est définie comme Z % en masse,
une somme de Y et Z est de 20 ou plus et de 80 ou moins.

**3.** Ensemble d'encres selon la revendication 1 ou la revendication 2,

dans lequel, dans un cas où la teneur en solvant MA par rapport à la quantité totale du liquide de maintenance est définie comme Y % en masse et
une teneur en solvant MB par rapport à la quantité totale du liquide de maintenance est définie comme Z % en

masse,
un rapport de Y à une somme de Y et Z est de 0,05 ou plus et de 0,20 ou moins.

**4.** Ensemble d'encres selon l'une quelconque des revendications 1 à 3,
dans lequel l'encre à jet d'encre contient en outre des particules de résine.

**5.** Ensemble d'encres selon la revendication 4,
dans lequel, dans un cas où une teneur totale en particules de résine et en dispersant de résine par rapport à une teneur totale en solides de l'encre à jet d'encre est définie comme X % en masse, X est de 40 ou plus et de 85 ou moins.

**6.** Ensemble d'encres selon la revendication 4 ou la revendication 5,

dans lequel, dans un cas où une teneur totale en particules de résine et en dispersant de résine par rapport à une teneur totale en solides de l'encre à jet d'encre est définie comme X % en masse,
la teneur en solvant MA par rapport à la quantité totale du liquide de maintenance est fixée à Y % en masse, et une teneur en solvant MB par rapport à la quantité totale du liquide de maintenance est définie comme Z % en masse,
un rapport de X à une somme de Y et Z est de 0,7 ou plus et inférieur à 3,5.

**7.** Ensemble d'encres selon l'une quelconque des revendications 1 à 6,
dans lequel la partie hydrophobe est un groupe hydrocarboné.

**8.** Ensemble d'encres selon l'une quelconque des revendications 1 à 7,
dans lequel le solvant organique ayant une valeur MA de 5,8 ou moins est au moins l'un choisi dans le groupe constitué d'un composé monoalcool et d'un composé dialcool.

**9.** Ensemble d'encres selon l'une quelconque des revendications 1 à 8,
dans lequel le solvant organique ayant une valeur MA de 5,8 ou moins inclut au moins l'un choisi dans le groupe constitué d'octanol, de 2-éthylhexanol, d'heptanol, d'hexanol, de pentanol, de butanol, de 2-méthyl-2-butanol, de 2-éthyl-1,3-hexanediol, de 1,8-octanediol, de 2,2,4-triméthyl-1,3-pentanediol, d'alcool 4-méthylbenzylique, de 1,7-heptanediol, de 3-éthyl-3-oxétaneméthanol, d'alcool benzylique, de 1,6-hexanediol, de 3-méthoxybutanol et de 1,5-pentanediol.

**10.** Ensemble d'encres selon l'une quelconque des revendications 1 à 9,

dans lequel le solvant MA inclut un solvant organique constitué de la partie hydrophile et de la partie hydrophobe et ayant une valeur MA de 4,8 ou moins, et
une teneur en solvant organique ayant une valeur MA de 4,8 ou moins est dans une plage de 0,5 % en masse à 10 % en masse par rapport à la quantité totale du liquide de maintenance.

**11.** Ensemble d'encres selon l'une quelconque des revendications 1 à 10,

dans lequel le solvant MA inclut un solvant organique constitué de la partie hydrophile et de la partie hydrophobe et ayant une valeur MA de 5,8 ou moins et un point d'ébullition de 100 °C ou plus, et
une teneur en solvant organique ayant un point d'ébullition de 100 °C ou plus est dans une plage de 0,5 % en masse à 10 % en masse par rapport à la quantité totale du liquide de maintenance.

**12.** Procédé d'enregistrement d'images utilisant l'ensemble d'encres selon l'une quelconque des revendications 1 à 11, le procédé comprenant :

une étape consistant à appliquer l'encre à jet d'encre sur un matériau de base afin d'enregistrer une image en permettant à l'encre à jet d'encre d'être projetée depuis une tête à jet d'encre ; et
une étape consistant à éliminer, à l'aide du liquide de maintenance, au moins l'une de l'encre à jet d'encre ou d'une substance séchée de l'encre à jet d'encre adhérant à une surface de la tête à jet d'encre à partir de laquelle l'encre à jet d'encre a été projetée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007169314 A
- JP 2014095057 A
- JP 2008214525 A
- JP 2017189889 A
- US 2007132807 A1
- JP 2011063658 A
- EP 3889228 A1
- JP 2007100071 A
- WO 2013180074 A
- JP 2016188345 A
- JP 2011063777 A
- JP 2011042150 A
- JP 2007098610 A
- JP 59157636 A
- JP S59157636 A
- JP 2003322926 A
- JP 2004325707 A
- JP 2004309806 A
- JP 2013001854 A
- JP 54059936 A
- JP S5459936 A
- JP 2003306623 A
- JP 5819206 B
- JP 2011073295 A
- JP 2011073339 A
- JP 2010241127 A